Europäisches Patentamt

European Patent Office

Office européen des brevets

(11) Veröffentlichungsnummer: **0 150 540**
**B1**

(12) **EUROPÄISCHE PATENTSCHRIFT**

(45) Veröffentlichungstag der Patentschrift: **18.07.90**

(51) Int. Cl.⁵: **H 04 L 12/40**

(21) Anmeldenummer: **84201934.1**

(22) Anmeldetag: **24.12.84**

(54) **Verfahren zur Datenübertragung, sowie Station zur Durchführung des Verfahrens.**

(30) Priorität: **21.01.84 DE 3402076**

(43) Veröffentlichungstag der Anmeldung:
**07.08.85 Patentblatt 85/32**

(45) Bekanntmachung des Hinweises auf die
Patenterteilung:
**18.07.90 Patentblatt 90/29**

(84) Benannte Vertragsstaaten:
**AT DE FR GB IT**

(56) Entgegenhaltungen:
**GB-A-1 567 308**
**GB-A-2 074 819**

(73) Patentinhaber: **Philips Patentverwaltung GmbH
Wendenstrasse 35 Postfach 10 51 49
D-2000 Hamburg 1 (DE)**
(84) **DE**

(73) Patentinhaber: **N.V. Philips'
Gloeilampenfabrieken
Groenewoudseweg 1
NL-5621 BA Eindhoven (NL)**
(84) **FR GB IT AT**

(72) Erfinder: **Hesse, Winfried
Bäckerstrasse 2
D-2000 Schenefeld (DE)**

(74) Vertreter: **Poddig, Dieter, Dipl.-Ing. et al
Philips Patentverwaltung GmbH Wendenstrasse
35 Postfach 10 51 49
D-2000 Hamburg 1 (DE)**

**Beschreibung**

Die Erfindung betrifft ein Verfahren zur Übertragung von Daten von einer Station zu einer anderen Station über einen Datenbus, an den mehrere Stationen parallel derart angeschlossen sind, wobei die von allen Stationen ausgesandten Signale über eine ODER-Funktion auf dem Datenbus verknüpft werden, wobei alle Stationen die auf dem Datenbus vorhandenen Signale empfangen und mindestens einige Stationen unabhängig voneinander einen Zugriff auf den Datenbus für eine Datenübertragung ausführen, wenn zu übertragende Daten vorhanden sind und das auf dem Datenbus vorhandene Signal während einer vorgegebenen Zeitdauer dem logischen Wert "0" entspricht, und für eine Datenübertragung periodisch für jedes Datenbit zunächst während einer vorgegebenen ersten Teilperiode ein Signal entsprechend dem logischen Wert "1", der den Zustand des Datenbusses als "belegt" kennzeichnet, während einer vorgegebenen zweiten Teilperiode ein Signal, das dem Wert des zu übertragenden Datenbits entspricht, und während einer vorgegebenen dritten Teilperiode ein Signal entsprechend dem logischen Wert "0" auf dem Datenbus übertragen wird, sowie eine Station zur Durchführung des Verfahrens.

Ein derartiges Verfahren ist bekannt aus der DE-A-31 15 453 (übereinstimmend mit US-A-44 18 386 und verwendet ein Übertragungsmedium, das mindestens zwei logische Zustände übertragen kann, beispielsweise ein verdrilltes Adernpaar oder ein Koaxialkabel oder auch beispielsweise eine Glasfaserverbindung. Damit läßt sich eine Datenübertragung besonders preisgünstig durchführen. Ein gewisses Problem ist dabei jedoch die Synchronisation zwischen dem jeweiligen Datensender und Datenempfänger sowie in dem Fall, daß mehrere Stationen gleichzeitig auf den Bus zugreifen, die Auswahl, welche Station schließlich den Zugriff zum Bus behält. Diese Probleme lassen sich bei Verwendung mehrerer paralleler Übertragungsleitungen für den Datenbus leichter lösen, jedoch entsteht dann für die Verbindung ein höherer Aufwand, was ebenfalls nicht erwünscht ist.

Bei der Anordnung nach der genannten DE-A-31 15 453 warten sendebereite Stationen nach dem Ende des letzten Vorganges auf dem Datenbus eine erste Zeitdauer ab, ob der Bus weiterhin im Ruhezustand bleibt, und wenn dies der Fall ist, wird nach einer zweiten Zeitdauer ein Zeichen über den Bus ausgesandt. Dies erfolgt dadurch, daß eine sendende Station nach Ablauf der zweiten Zeitspanne den logischen Wert "1" auf den Bus bringt, nachdem dieser vorher im Ruhezustand den logischen Wert "0" hatte. Eine bestimmte Zeit danach wird ein Datenzeichen ausgesendet, und anschließend kehrt der Datenbus wieder in den Ruhezustand zurück, wobei die sendende Station oder ggf. auch Stationen den Zustand des Datenbusses wieder für eine gewisse Zeit überwachen. Alle Zeiten bzw. Zeitspannen sind dabei von den internen Taktgeber der respektiven Stationen abhängig, die relativ große Streuungen aufweisen können. Um insbesondere bei einem gleichzeitigen Zugriff durch mehrere Stationen eindeutige Zustände zu erreichen, müssen aufgrund dieser Toleranzen die einzelnen Zeiten bestimmten Bedingungen gehorchen, die in der DE-OS 31 15 453 angegeben sind. Dies führt zu einer umständlichen und zeitraubenden Steuerung in den einzelnen Stationen, die daher auch kostenaufwendig ist.

Aus der DE-A-31 15 455 (übereinstimmend mit US-A-44 29 384) ist ferner ein Verfahren und eine Anordnung bekannt, bei der die Übertragung von Daten ebenfalls über eine einzelne Übertragungsstrecke, wie z.B. ein verdrilltes Adernpaar oder eine Glasfaserstrecke vorgenommen wird. Die Übertragung erfolgt dabei blockweise, wobei einem Block ein Startbit vorangeht, während dem der Datenbus auf den logischen Wert "1" gebracht wird. Die Darstellung der logischen Werte der Datenbits erfolgt dabei durch unterschiedliche Dauern eines bestimmten Signalzustandes auf dem Datenbus, im Gegensatz zu der erstgenannten Anordnung nach der DE-A-31 15 453, bei der der logische Wert eines Bits durch den Signalwert selbst auf dem Datenbus bestimmt wird. Bei der genannten Anordnung nach der DE-A-31 15 455 ist es ferner notwendig, daß die Frequenzen der Taktgeneratoren in den einzelnen Stationen in gewissen Grenzen definiert sind, wobei auch mehrere Klassen von Frequenzen für die Taktgeneratoren möglich sind. Zu Beginn einer Datenübertragung muß dann jedoch von der sendenden Station zunächst festgestellt werden, welcher Klasse von Taktfrequenzen die angerufene Station zugehört. Auch dieses Übertragungsverfahren ist umständlich und relativ kostenaufwendig.

Aus der GB-A-1 567 308 ist ein System zur Datenübertragung bekannt, bei dem der Empfänger vor Beginn einer Übertragung mit dem Sender synchronisiert wird. Dazu wird zunächst ein Synchronisierimpuls mit vorbestimmter Dauer übertragen, die die Abstände der nachfolgenden Datenzeichen angibt. Im Empfänger wird während dieser Impulsdauer ein Zähler von Null an gezählt und der Zählerstand am Ende des Impulses wird halbiert gespeichert. Dieser halbierte Zählerstand wird anschließend wiederholt gezählt und erzeugt dabei Abtastimpulse zur Abtastung der anschließend übertragenen Daten. Insbesondere bei längeren Datenübertragungen besteht die Möglichkeit, daß durch numerische Ungenauigkeiten und Toleranzen von Bauelementen im Empfänger sich die Abtastimpulse zeitlich gegenüber den Zeitpunkten, zu denen die Datensignale vom Sender eintreffen, verschieben.

Aufgabe der Erfindung ist es, ein Verfahren der eingangs genannten Art anzugeben, das bei geringem Aufwand die Übertragung von Daten zwischen Stationen mit großen Taktfrequenzunterschieden ermöglicht, wobei eine einfache Synchronisierung durch die jeweils sendende Station erfolgt und zuverlässig aufrechterhalten wird.

Diese Aufgabe wird erfindungsgemäß dadurch gelöst, daß die erste Teilperiode in zwei Unterperioden unterteilt ist, daß die Zeitdauern der drei Teilperioden und der Unterperioden ein festes Verhältnis zueinander aufweisen, wobei während der ersten Unterperiode auch außerhalb der Datenübertragung auf dem Datenbus stets ein Signal entsprechend dem logischen Wert "1" und während der zweiten Unterperiode nur während einer Datenübertragung ein Signal entsprechend dem logischen Wert "1" über den Datenbus übertragen wird und eine sendebereite Station nur dann einen Zugriff auf dem Datenbus ausführt, wenn in der zweiten Unterperiode das Signal auf dem Datenbus dem logischen Wert "0" entspricht, und daß in allen Stationen aus den Signalübergängen auf dem Datenbus zu Beginn jeweils zweier aufeinanderfolgender perioden die Lage der Teilperioden darin in der jeweils folgenden Periode ermittelt wird.

Durch die festen Verhältnisse der Teilperioden und Unterperioden zueinander und dadurch, daß auch während der Übertragungspausen in der ersten Unterperiode ständig ein Signal übertragen wird und damit ständig die momentane Dauer der Gesamtperiode in allen Stationen bekannt ist, läßt sich die Synchronisation auch ständig aufrechterhalten, so daß sich keine Synchronisationsprobleme ergeben. Ferner sind dadurch, daß das Signal auf dem Datenbus während der zweiten Unterperiode, d.h. zu einem bestimmten vorgegebenen Zeitpunkt innerhalb der Gesamtperiode, unmittelbar angibt, ob der Datenbus belegt ist, Wartezeiten und besondere zeitliche Steuerabläufe nicht erforderlich bzw. sehr einfach.

Die Erzeugung des Signals entsprechend dem logischen Wert "1" auf dem Datenbus kann dabei von einer der Stationen ständig erfolgen, die beispielsweise nur für die Aussendung dieses Signals innerhalb der ersten Unterperiode vorhanden ist, oder die Stationen wechseln sich ab, indem jede Station nach Beendigung einer Datenübertragung in der ersten Unterperiode noch weiter ein Signal entsprechend dem logischen Wert "1" aussendet, bis eine andere Station den Bus belegt und damit die Synchonisation übernimmt. Dabei kann diese neu zugreifende Station mit der gleichen Periodendauer entsprechend der vorhergehenden ständigen Synchronisierung weiterarbeiten, sie kann jedoch auch eine neue Periodendauer erzeugen. In letzterem Falle ist es allerdings zweckmäßig, wieder dem Beginn einer Datenübertragung mindestens eine Periode ohne Übertragung eines Bits vorzuschalten.

Eine besonders zweckmäßige Wahl der Dauern der Teilperioden bzw. der Unterperioden besteht darin, daß die zweite und die dritte Teilperiode bzw. die Unterperioden gleiche Zeitdauern von jeweils 1/4 der Periode haben. Ein derartiges Verhältnis läßt sich besonders einfach realisieren. Für eine möglichst störungssichere Auswertung der über den Datenbus übertragenen Information ist es zweckmäßig, daß die Ermittlung des Zustandes des Datenbusses und des logischen Wertes des übertragenen Bits jeweils etwa in der Mitte der zugehörigen Teilperiode bzw. Unterperiode vorgenommen wird. Derartige Ermittlungszeitpunkte bzw. Abtastzeitpunkte lassen sich ebenfalls sehr einfach realisieren.

In vielen Fällen wird von einer sendenden Station eine andere Station gerufen, um von der letzteren Informationen abzuholen und zu der sendenden Station zu übertragen. Dafür kann von der sendenden Station die gewünschte andere Station durch die Datenübertragung adressiert und der Übertragungswunsch mitgeteilt werden. Danach beendet die zuerst sendende Station die Datenübertragung, und sobald der Datenbus als frei gemeldet wird, beginnt die vorher adressierte Station die Datenübertragung. Eine einfachere Möglichkeit besteht nach einer weiteren Ausgestaltung der Erfindung jedoch auch darin, daß auch, wenn in der ersten Teilperiode bzw. der zweiten Unterperiode ein Signal entsprechend dem logischen Wert "1" durch eine erste Station über den Datenbus übertragen wird, eine durch von dieser ersten Station ausgesandte Daten adressierte zweite Station während der zweiten Teilperiode mindestens einer Periode ein Signal entsprechend dem logischen Wert eines zu übertragenden Datenbits über den Datenbus überträgt und die erste Station während der zweiten Teilperiode dieser Periode ein Signal entsprechend dem logischen Wert "0" dem Datenbus zuführt. Auf diese Weise kann einfach ein Dialog zwischen zwei Stationen durchgeführt werden.

Ausbildungen einer Station zur Durchführung des erfindungsgemäßen Verfahrens sind in den weiteren Unteransprüchen gekennzeichnet.

Kurze Beschreibung der Figuren

Ausführungsbeispiele der Erfindung werden nachstehend anhand der Zeichnung näher erläutert. Es zeigen

Fig. 1 den Anschluß einer Anzahl Stationen an einen ringförmig geführten Datenbus,

Fig. 2 Signalverläufe auf dem Datenbus bei verschiedenen Betriebszuständen,

Fig. 3 eine senderseitige Ablaufsteuerung in einer Station,

Fig. 4 eine Anordnung für die Auswertung des Signals auf dem Datenbus in einer Station,

Fig. 5a bis 5c Zeitdiagramme einer Anzahl Signale der Anordnung nach Fig. 4,

Fig. 6 eine andere Anordnung zur Auswertung des Signals auf dem Datenbus in einer Station,

Fig. 7 bis 9 einige Flußdiagramme für die Programmierung eines Microprozessors, der das erfindungsgemäße Verfahren ausführt.

Allgemeine Beschreibung Eines Ausführungsbeispiels

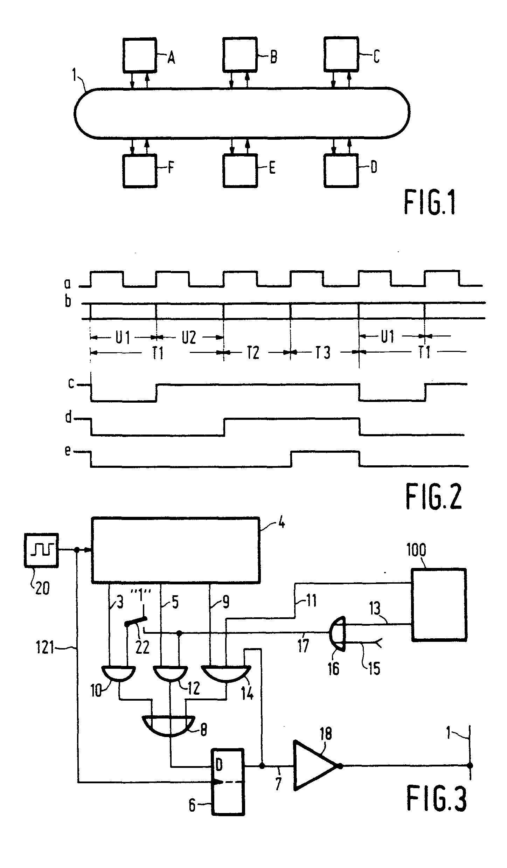

In Fig. 1 sind sechs Stationen A bis F symbolisch als Blöcke dargestellt. Sowohl der Ausgang als auch der Eingang jeder dieser Stationen A bis F ist mit einem Datenbus 1 verbunden, der hier als geschlossener Ring dargestellt ist. Die Verwendung eines offenen Ringes ist jedoch ebenso gut möglich, und auch eine sternförmige Struktur kann verwendet werden. Der Datenbus 1 kann beispielsweise aus einem Koaxialkabel oder einem verdrillten Aderenpaar bestehen, er kann jedoch auch als Glasfaserverbindung für die Übertragung optischer Signale ausgebildet sein. Im letzteren Fall ist eine solche Glasfaserverbindung jedoch häufig in jeder Station unterbrochen und führt dort empfangsseitig auf einen Lichtempfänger, der ausgangsseitig einen Lichtsender ansteuert, wobei letzterer sowohl die empfangenen Lichtsignale als auch die in der betreffenden Station erzeugten Signale aussendet.

Der zeitliche Verlauf der Signale auf dem Datenbus bei verschiedenen Betriebszuständen ist in Fig. 2 dargestellt. Die Zeile a zeigt ein Taktsignal innerhalb der Station, das anhand der Fig. 3 näher erläutert wird. In der Zeile b ist ein Überblick über die einzelnen Teilperioden einer gesamten Periode angegeben. Jede Gesamtperiode umfaßt die Teilperioden T1, T2 und T3, und nach dem Ende der dritten Teilperiode T3 beginnt unmittelbar die erste Teilperiode T1 der folgenden Gesamtperiode. In dem dargestellten Beispiel betragen die Dauern der zweiten und dritten Teilperiode T2 und T3 jeweils ein Viertel der Gesamtperiode, so daß die erste Teilperiode T1 eine halbe Gesamtperiode einnimmt. Es sind auch andere Zahlenverhältnisse möglich, jedoch ergeben die dargestellten Verhältnisse der Dauern der Teilperioden eine günstige technische Realisierung, wie später erläutert wird.

In dem Beispiel der Fig. 2 ist die erste Teilperiode T1 in zwei Unterperioden U1 und U2 unterteilt. Diese sind hier beide gleich lang und betragen somit ein Viertel der Gesamtperiode, ebenso wie die zweite und dritte Teilperiode T2 und T3. Diese Wahl der Dauern der Unterperioden U1 und U2 ist ebenfalls lediglich wegen der einfachen technischen Realisierung gewählt, während auch andere Zahlenverhältnisse möglich sind.

Der allgemeine Fall der Signale auf dem Datenbus während einer Datenübertragung ist in den Zeilen d und e dargestellt. Dabei herrscht also während der ersten Teilperiode T1 ein niedriges Signal auf dem Datenbus, wobei angenommen wird, daß bei einem elektrischen Kabel als Datenbus in jeder Station ausgangsseitig ein mit Masse verbundener Transistor mit offenem Kollektor vorgesehen ist, während an einer einzigen Stelle ein Arbeitswiderstand gegen eine positive Betriebsspannung geschaltet ist. Im Falle einer Glasfaserverbindung bedeutet der untere Zustand der Linie, daß ein Lichtsignal übertragen wird, während im oberen Zustand der Linie kein Lichtsignal vorhanden ist. Damit ist eine verdrahtete ODER-Funktion realisiert, in der ein niedriges Signal den Wert "1" angibt.

Der niedrige Zustand der Linien in den Zeilen d und e während der ersten Teilperiode T1 bedeutet, daß eine Datenübertragung stattfindet und der Bus somit belegt ist. Dies ist von allen an den Datenbus angeschlossenen Stationen unmittelbar erkennbar. Der Zustand der Linien in den Zeilen d und e der Fig. 2 unterscheidet sich lediglich während der zweiten Teilperiode T2, in der der Wert des übertragenen Datenbits angegeben wird. Beispielsweise wird bei einem Signalverlauf gemäß der Zeile d ein Datenbit mit dem logischen Wert "0" übertragen und bei dem Signalverlauf der Zeile e ein Datenbit mit dem logischen Wert "1". Während der Teilperiode T3 besteht hier auf jeden Fall ein hohes Signal auf dem Datenbus.

Bei dem Empfang des Signals auf dem Datenbus 1 ermitteln alle angeschlossenen Stationen aus der negativen Signalflanke zu Beginn der ersten Teilperiode T1 zweier aufeinanderfolgender Gesamtperioden die Dauer der Gesamtperiode und damit die Lage der Teilperiode T2 aus dem vorgegebenen Verhältnis der einzelnen Teilperioden zueinander. Im dargestellten Beispiel beginnt die zweite Teilperiode T2 also eine halbe ermittelte Gesamtperiode nach der negativen Signalflanke auf dem Datenbus. Innerhalb eines weiteren Viertels der Gesamtperiode kann dann das Signal auf dem Datenbus ausgewertet werden, um den Wert des übertragenen Datenbits zu ermitteln.

Auch wenn keine Datenübertragung stattfindet, wird auf dem Datenbus ein wechselndes Signal übertragen, wie dies in der Zeile c in Fig. 2 dargestellt ist. Hier wird also während der ersten Unterperiode U1 ein niedriges Signal auf dem Datenbus erzeugt, so daß allen Stationen ständig eine bstimmte Dauer der Gesamtperiode vorgegeben wird und alle Stationen somit ständig synchronisiert sind. Dieses Signal kann von einer bestimmten Station erzeugt werden, beispielsweise von der Station A in Fig. 1, oder jede Station, die Daten ausgesendet hat, sendet anschließend ein Signal gemäß der Zeile c in Fig. 2 auf dem Datenbus, bis eine andere Station eine Datenübertragung beginnt. Der Beginn einer Datenübertragung ist daran erkennbar, daß nun auch während der zweiten Unterperiode U2 ein niedriges Signal auf dem Datenbus erzeugt wird, so daß ein Signalverlauf entsprechend der Zeile d oder e in Fig. 2 erzeugt wird, abhängig von dem Wert des übertragenen Datenbits. Der Signalzustand auf dem Datenbus während der zweiten Unterperiode U2 gibt den Zustand des Datenbusses an, d.h. ob dieser frei oder für eine Datenübertragung belegt ist. Da alle Stationen vor einer Datenübertragung, d.h. im Ruhezustand, ein Signal auf dem Datenbus entsprechend der Zeile c in Fig. 2 empfangen, kann eine Station, die eine Datenübertragung beginnt, dies mit der gleichen oder zumindest im wesentlichen gleichen Periodendauer durchführen, die durch das vorherige Signal auf dem Datenbus bestimmt war.

Die Übertragung eines synchronisierenden Signals über den Datenbus auch außerhalb einer Datenübertragung ist besonders dann günstig, wenn damit gerechnet werden muß, daß mehrere Stationen gleichzeitig auf den Datenbus zugreifen können und die Entscheidung, welche Station den Zugriff endgültig behält, in bekannter Weise während der Übertragung erfolgt, weil dann die Datenbits aller Stationen gleichzeitig auf dem Datenbus vorhanden sind und ein Datenbit mit dem logischen Wert "0" von einer ersten Station durch ein Datenbit mit dem logischen Wert "1" von einer zweiten Station maskiert wird, was die erste Station erkennt und zum Beenden des Zugriffs auf dem Datenbus bringt.

Beschreibung Einer Senderseitigen Anordnung
Eine mögliche Anordnung, die die in den Zeilen c bis d der Fig. 2 dargestellten Signale erzeugen kann und die einen Teil der Stationen A bis F in Fig. 1 darstellen kann, ist in Fig. 3 gezeigt. Ein Taktgenerator 20, der den Verarbeitungstakt in der betreffenden Station erzeugt, liefert auf der Leitung 121 ein Taktsignal, das dem Signalverlauf in der Zeile a der Fig. 2 entspricht und das vorzugsweise von einem höherfrequenten Taktsignal durch Teilung abgeleitet ist. Dieses Taktsignal auf der Leitung 121 wird außer einem D-Flipflop 6, das nachfolgend erläutert wird, einer Ablaufsteuerung 4 zugeführt, die im einfachsten Fall aus einem Binärzähler besteht. Diese Ablaufsteuerung 4 erzeugt nacheinander an den Ausgängen 3, 5 und 9 jeweils ein aus dem Zählerstand dekodiertes Sendesteuersignal, und zwar am Ausgang 3 während der ersten Unterperiode U1, am Ausgang 5 während der zweiten Unterperiode U2 und am Ausgang 9 während der zweiten Teilperiode T2. Die Signale schließen unmittelbar aneinander an und wechseln beispielsweise jeweils mit der Vorderflanke des Taktsignals auf der Leitung 121, wie aus Fig. 2 hervorgeht. Mit der nächsten Vorderflanke des Taktsignals auf der Leitung 121 nach dem Signal auf dem Ausgang 9 während der Teilperiode T2 erscheint während einer Taktperiode an keinem der Ausgänge ein Signal, was der Teilperiode T3 entspricht, und mit der dann folgenden Vorderflanke des Taktsignals erscheint wieder ein Signal am Ausgang 3, usw.

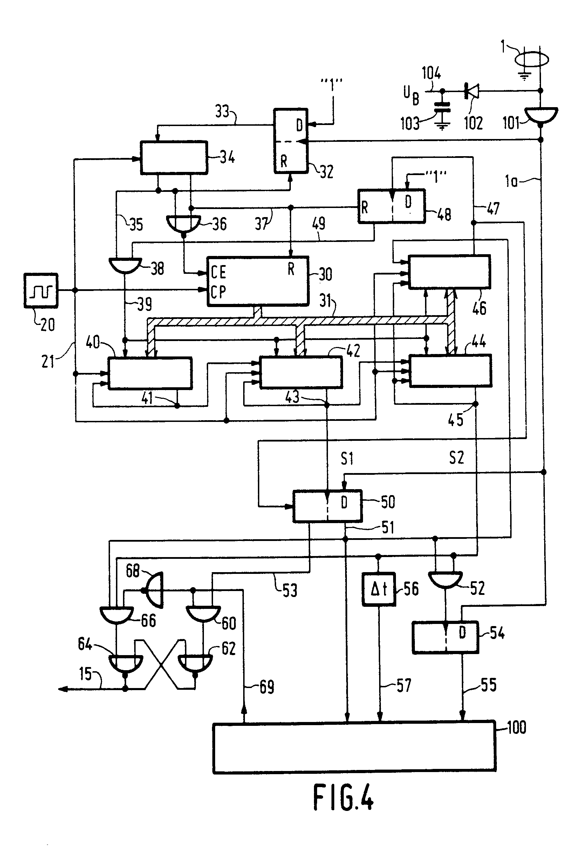

Jeder der Ausgänge 3, 5 und 9 ist mit dem einen Eingang eines zugeordneten UND-Gliedes 10, 12 bzw. 14 verbunden, deren Ausgänge über das ODER-Glied 8 zusammengefaßt und dem D-Eingang des D-Flipflops 6 zugeführt werden. Der andere Eingang des UND-Gliedes 10 ist mit einem Schalter 22 verbunden, der diesen Eingang entweder mit einem konstanten Signal entsprechend dem logischen Wert "1" oder mit der Leitung 17 verbinden kann, die außerdem mit dem anderen Eingang des UND-Gliedes 12 fest verbunden ist. Das Signal auf der Leitung 17 wird von einem ODER-Glied 16 erzeugt, wenn entweder auf der Leitung 15 ein Signal erscheint, das beispielsweise von der in Fig. 4 dargestellten Anordnung erzeugt wird, oder wenn ein Signal auf der Leitung 13 erscheint, das von einer nicht näher dargestellten Verarbeitungseinrichtung 100 erzeugt wird. Diese Verarbeitungseinrichtung 100 enthält beispielsweise eine Meßeinrichtung für eine zu messende Größe sowie einen Wandler, der das Meßsignal in einen digitalen Wert umwandelt und bitseriell über die Länge 11 abgibt. Diese Leitung 11, die also das auszusendende Datensignal führt, ist mit einem zweiten Eingang des UND-Gliedes 14 verbunden, dessen dritter Eingang mit dem Ausgang 7 des D-Flipflops 6 verbunden ist. Dieser Ausgang 7 führt außerdem über einen invertierenden Verstärker 18, der so aufgebaut ist, daß er zumindest in den ersten beiden Teilperioden eine ODER-Verknüpfung der von ihm erzeugten Signale mit den auf dem Datenbus vorhandenen Signalen bilden kann und der im einfachsten Fall aus einem Transistor in Emittergrundschaltung mit offenem Kollektor besteht, auf den Datenbus 1.

Die Funktion der in Fig. 3 dargestellten Anordnung ist wie folgt. Wenn zunächst angenommen wird, daß von der Station, in der diese Anordnung vorhanden ist, keine Daten ausgesendet werden sollen, dann ist sowohl auf der Leitung 13 als auch auf der Leitung 15 und damit auf der Leitung 17 ein Signal entsprechend dem logischen Wert "0" vorhanden, so daß das UND-Glied 12 gesperrt ist. Wenn sich weiter der Schalter 22 in der dargestellten Stellung befindet, ist das UND-Glied 10 ständig freigegeben und leitet das am Ausgang 3 der Ablaufsteuerung 4 während der ersten Unterperiode U1 erscheinende Signal über das ODER-Glied 8 zum D-Eingang des D-Flipflops 6 weiter. Da dieses D-Flipflop 6 am Takteingang flankengesteuert ist, übernimmt es das am D-Eingang anliegende Signal jeweils mit der nächsten Vorderflanke des Taktsignals auf der Leitung 121 zum Ausgang 7, so daß auf dem Datenbus 1 schließlich ein Signal erscheint, wie es in Fig. 2 in der Zeile c dargestellt ist, lediglich gegenüber der Zeile b tatsächlich um eine Phase des in der Zeile a dargestellten Taktsignals verschoben, was jedoch für die weitere Funktion keine Rolle spielt, so daß weiterhin von der in Fig. 2 angegebenen Darstellung ausgegangen wird. Wenn der Schalter 22 sich jedoch in der unteren Stellung befindet und den anderen Eingang des UND-Gliedes 10 mit der Leitung 17 verbindet, sind außerhalb einer Datenübertragung von der betreffenden Station aus alle UND-Glieder 10, 12 und 14 gesperrt, und das auf dem Datenbus vorhandene Signal ist ständig hoch bzw. ein von einer anderen Station erzeugtes niedriges Signal wird von dieser Station nicht beeinflußt. Diese untere Stellung kann eingenommen werden, wenn die Station detektiert hat, daß eine andere Station eine Sendeoperation durchführt. Es ist auch möglich, daß in einer Station die obere Stellung und in allen anderen die untere Stellung ständig vorhanden ist.

Zur Vorbereitung einer Datehübertragung wird auf der Leitung 17 ein Signal entsprechend dem logischen Wert "1" erzeugt, und zwar durch ein entsprechendes Signal auf der Leitung 13 von der Verarbeitungseinheit 100, wenn diese beispielsweise durch von einer anderen Station übersandte Signale zu einer Datenübertragung im Dialogbetrieb aufgefordert wurde. Dabei ist der Datenbus von dieser anderen Station also noch belegt, und während der zweiten Teilperiode einer oder mehrerer aufeinanderfolgender Gesamtperioden überträgt diese andere Station ein Signal entsprechend dem logischen Wert "0", so daß sie die logischen Werte der von der hier beschriebenen Anordnung übertragenen Datenbits erkennen kann. Die dafür erforderlichen Steuervorgänge werden hier im einzelnen nicht näher erläutert werden, da sie für die Erfindung nicht wesentlich sind. Im Normalfall wird auf der Leitung 15 von der Anordnung in Fig. 4 ein entsprechendes Signal erzeugt, wenn der Bus frei ist und zu sendende Daten vorliegen. Im übrigen kann auch diese Steuerung von der Verarbeitungseinheit 100 übernommen werden, wodurch dann in der Anordnung gemäß Fig. 3 das ODER-Glied 16 entfällt und die Leitung 13 direkt mit der Leitung 17 verbunden ist.

Bei einem Signal gemäß dem logischen Wert "1" auf der Leitung 17 wird unabhängig von der Stellung des Schalters 22 sowohl das UND-Glied 10 als auch das UND-Glied 12 freigegeben, so daß die Signale an den Ausgängen 3 und 5 der Ablaufsteuerung 4 während beider Unterperioden U1 und U2 dem D-Eingang des D-Flipflops 6 zugeführt werden, so daß auf dem Datenbus 1 Signale entsprechend der Zeile d oder der Zeile e in Fig. 2 erzeugt werden, abhängig von den zu übertragenden Daten, die über die Leitung 11 dem UND-Glied 14 zugeführt werden. Wenn ein Datum mit dem logischen Wert "0" übertragen werden soll, ist das UND-Glied 14 gesperrt, und das D-Flipflop 6 erzeugt nur während zweier aufeinanderfolgender Taktphasen des Taktsignals auf der Leitung 121 ein hohes Signal am Ausgang 7, so daß auf dem Datenbus 1 ein Signal entsprechend der Zeile d in Fig. 2 erscheint. Wenn jedoch das Signal auf der Datenleitung 11 hoch ist, werden die Signale an allen drei Ausgängen 3, 5 und 9 dem D-Eingang des D-Flipflops 6 zugeführt, da beim Erscheinen des Signals am Ausgang 9 das Flipflop 6 noch gesetzt ist und somit auch der rechte Eingang des UND-Gliedes 14 freigegeben ist. Dadurch erscheint während dreier aufeinanderfolgender Taktphasen ein niedriges Signal auf dem Datenbus 1 entsprechend der Zeile e in Fig. 2. Der rechte Eingang des UND-Gliedes 14 könnte auch mit der Leitung 17 verbunden sein, jedoch hat die dargestellte Verbindung den Vorteil, daß das hohe Signal auf der Leitung 17 bereits nach dem Ende des Signals am Ausgang 5, d.h. bereits nach der zweiten Unterperiode U2, verschwinden kann, und trotzdem ist sichergestellt, daß während der folgenden Teilperiode T2 ein gültiges Datum übertragen wird.

Beschreibung Einer Anordnung für die Auswertung des Datenbussignals

Bei der in Fig. 4 dargestellten Anordnung zum Empfang und zur Auswertung der Signale auf dem Datenbus 1 wird angenommen, daß der Datenbus 1 aus einer elektrischen Verbindung besteht, z.B. einem verdrillten Adernpaar oder einer Koaxialleitung, die also einen Bezugsleiter und einen Signalleiter enthält. Der Bezugsleiter ist mit dem Bezugspunkt der Anordnung nach Fig. 4 verbunden, und der Signalleiter führt über einen Gleichrichter 102 auf einen Ladekondensator 103 mit großer Kapazität. Von dieser Verbindung 104 mit dem Ladekondensator 103 wird die Betriebsspannung $U_B$ für die elektronischen Teile der Station, von der die in Fig. 4 dargestellte Anordnung einen Teil bildet, abgenommen. Auf diese Weise benötigt diese Station dann keine eigene Stromversorgung.

Der Signalleiter des Datenbusses 1 führt ferner auf einen invertierenden Verstärker 101, der zweckmäßig mit einer definierten Schaltschwelle versehen ist und am Ausgang 1a unabhängig von der Signalform auf dem Datenbus 1 ein definiertes binäres Signal mit steilen Übergängen liefert.

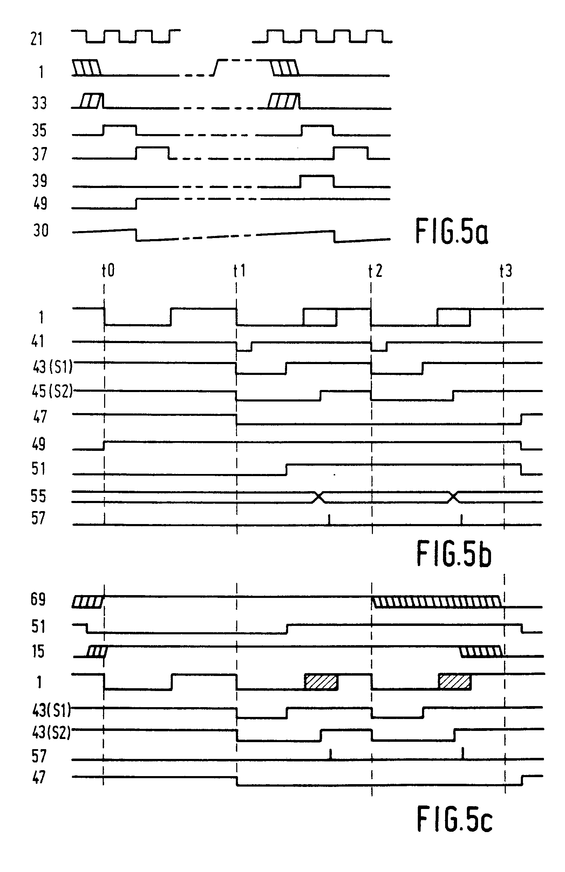

Das invertierte Datenbus-Signal auf der Leitung 1a, das zu Beginn jeder neuen Periode der Signale auf dem Datenbus 1 eine positive Signalflanke hat, führt auf den Takteingang eines flankengesteuerten D-Flipflops 32, dessen D-Eingang fest mit einem Signal entsprechend dem logischen Wert "1" verbunden ist. Wenn also eine positive Flanke auf der Leitung 1a auftritt, wird das D-Flipflop 32 gesetzt und liefert dann auf der Ausgangsleitung 33 ein Signal entsprechend dem logischen Wert "1". Diese Vorgänge sind in Fig. 5a näher dargestellt.

Die Leitung 33 führt auf den Dateneingang eines zweistufigen Schieberegisters 34, das am Takteingang ein vom Taktgenerator 20 auf der Leitung 21 erzeugtes Taktsignal erhält, dessen Frequenz höher als das des Taktsignals auf der Leitung 121 in Fig. 3 ist. Mit der ersten positiven Flanke dieses Taktsignals wird der auf der Leitung 33 vorhandene Wert "1" in das Schieberegister 34 übernommen, und auf der Ausgangsleitung 35 erscheint ein positives Signal. Dieses setzt das D-Flipflop 32 wieder zurück. Ferner führt die Leitung 35 über das NOR-Glied 36 auf den Freigabeeingang CE eines Zählers 30, der nachfolgend beschrieben wird, und sperrt dessen Zählvorgang. Außerdem führt die Leitung 35 auf den einen Eingang eines UNDGliedes 38, dessen anderer Eingang mit der Leitung 49 von dem D-Flipflop 48 verbunden ist und zunächst eine logische "0" erhält.

Mit der Vorderflanke des nächsten Taktsignals auf der Leitung 21 wird die logische "1" in dem Schieberegister 34 weitergeschoben, so daß auf der Leitung 37 ein Signal entsprechend dem logischen Wert "1" erscheint. Dieses setzt den Zähler 30 über den Rücksetzeingang R auf eine definierte Anfangsstellung bzw. die Nullstellung zurück und setzt außerdem das D-Flipflop 48 zurück, so daß nun die Leitung 49 eine "1" führt, jedoch hat nun die Leitung 35 bereits wieder eine "0". Außerdem führt die Leitung 37 ebenfalls über das NOR-Glied 36 auf den Sperreingang CE des Zählers 30 und hält diesen weiter gesperrt. Mit der nächsten Vorderflanke des Taktsignals auf der Leitung 21 verschwindet dann auch die logische "1" auf der Leitung 37, so daß nun der Zähler 30 freigegeben ist, um von der Anfangsstellung mit dem Takt auf der Leitung 21 hochzuzählen.

Es vergeht nun im Verhältnis zu den links in Fig. 5a dargestellten Vorgängen eine längere Zeit, bis das Signal auf dem Datenbus 1 wieder positiv wird, was jedoch keine weiteren Vorgänge auslöst. Nach einer weiteren längeren Zeit erscheint dann wieder eine negative Flanke in dem Signal auf dem Datenbus 1, die wieder asynchron zu dem Taktsignal auf der Leitung 21 ist, d.h. wieder an einer beliebigen Stelle zwischen zwei positiven Flanken dieses Signals auftreten kann. Das D-Flipflop 32 wird wieder mit dieser Flanke des Signals auf dem Datenbus 1 gesetzt, und mit der nächsten positiven Flanke des Taktsignals 21 erscheint auf der Leitung 35 wieder ein positives Signal, das nun jedoch durch das ebenfalls positive Signal auf der Leitung 49 über das UND-Glied 38 ein entsprechendes Signal auf der Leitung 39 erzeugt, das die Zähler 40, 42, 44 und 46 auf eine Stellung setzt, die über die Mehrfach-Verbindung 31 von dem Zähler 30 im Augenblick des Auftretens des Signals 35 bestimmt ist. Dieser Inhalt des Zählers 30 ist ein Maß für die Periodendauer zweier aufeinanderfolgender gleicher Signalwechsel auf dem Datenbus 1, wenn die Frequenz des Taktgenerators 20 als konstant angenommen wird, und aus dieser Zählerstellung des Zählers 30 können die einzelnen Teilperioden bzw. Unterperioden abgeleitet werden. Mit der nächsten Flanke des Taktsignals 21 wird der Zähler 30 nun wieder auf die Anfangsstellung zurückgesetzt und beginnt danach erneut zu zählen, wodurch die Dauer der folgenden Periode ausgemessen wird. Diese Messung ergibt zwar zwischen jeweils zwei aufeinanderfolgenden Signalflanken auf dem Datenbus 1 eine etwas zu kurze Zeit, da während der beiden aufeinanderfolgenden Signale auf den Leitungen 35 und 37, d.h. während zwei Perioden des Taktsignals 21, der Zähler gesperrt ist, und außerdem ergibt sich eine gewisse Ungenauigkeit dadurch, daß die Flanken des Signals auf dem Datenbus 1 asynchron zu dem Taktsignal 21 sind, jedoch ist der dadurch erzeugte Gesamtfehler gering, wenn die Frequenz des Taktsignals 21 wesentlich höher ist als die Frequenz der Signale auf dem Datenbus. Typische Werte für das Taktsignal 21 sind beispielsweise einige MHz, während die Frequenz des Signals auf dem Datenbus beispielsweise einige kHz beträgt. Die Kapazität des Zählers 30 muß dann entsprechend ausgelegt sein, d.h. mindestens etwa 10 bis 12 Teilerstufen bei einem Binärzähler umfassen.

Die Zähler 40, 42, 44 und 46 werden nun nicht auf die gleiche Stellung gesetzt, die der Zähler 30 im Augenblick des Signals auf der Leitung 39 bzw. 35, d.h. unmittelbar nach der negativen Signalflanke auf dem Datenbus 1, erreicht hatte, sondern auf eine dagegen um einige Stellen verschobene Stellung. Beim Zähler 40 ist diese Stellung um drei Stellen verschoben, d.h. das Bit viertniedrigster Wertigkeit des Zählers 30 bestimmt die Stellung des Bits niedrigster Wertigkeit des Zählers 40 usw., so daß die drei Bits niedrigster Wertigkeit des Zählers 30 hierfür nicht berücksichtigt werden. Der Zähler 40 erhält das Taktsignal 21 an einem Rückwärts-Zähleingang und zählt nun von der gesetzten Stellung aus rückwärts bis zur Nullstellung, bei der auf der Leitung 41 eine "1" erzeugt wird. Dies geschieht wegen der um drei Bits verschobenen Zählerstellung nach etwa einem Achtel der Anzahl Taktsignale auf der Leitung 21, die der Zähler 30 vorher während einer Periode des Datensignals auf dem Datenbus 1 gezählt hatte, d.h. nach einem Achtel einer solchen Periode und damit etwa in der Mitte der ersten Unterperiode U1 in Fig. 2.

Diese Verhältnisse sind in Fig. 5b in einem gegenüber der Fig. 5a wesentlich komprimierten Zeitmaßstab dargestellt. Zum Zeitpunkt t0 tritt die erste Flanke in dem Signal auf dem Datenbus 1 auf, die in Fig. 5a links dargestellt ist und den Beginn einer Datenübertragung darstellt. Dabei wird von dem Fall ausgegangen, daß außerhalb einer Datenübertragung auf dem Datenbus 1 ständig ein hohes Signal liegt oder daß mit dem Beginn einer Datenübertragung von einer neuen Station ein Sprung in der Periodendauer bei der folgenden Übertragung auftritt, so daß zunächst eine volle Periodendauer ausgemessen werden muß, in der keine Übertragung eines Datums erfolgen kann. Wie anhand der Fig. 5a erläutert wurde, arbeitet von dieser ersten Signalflanke auf dem Datenbus 1 zum Zeitpunkt t0 bis zur nächsten Signalflanke zum Zeitpunkt t1 nur der Zähler 30 zum Ausmessen der Zeitdauer zwischen diesen beiden Flanken, während die Zähler 40, 42, 44 und 46 sich in der Nullstellung befinden und die Leitungen 41, 43, 45 und 47 ständig ein hohes Signal führen, wie aus Fig. 5b hervorgeht. Lediglich das D-Flipflop 48 ist unmittelbar nach der Signalflanke zum Zeitpunkt t0 rückgesetzt worden, so daß die Leitung 49 zu diesem Zeitpunkt ein hohes Potential annimmt.

Mit der zum Zeitpunkt t1 auftretenden Signalflanke auf dem Datenbus 1 werden die Zähler 40, 42, 44 und 46 auf einen Bruchteil der zu diesem Zeitpunkt erreichten Zählerstellung des Zählers 30 gesetzt, und zwar der Zähler 40 wie bereits erläutert auf einen um drei Stellen verschobenen Wert entsprechend einem Achtel der Gesamtperiodendauer, während die Zähler 42 und 44 auf einen um zwei Stellen verschobenen Wert entsprechend einem Viertel der Gesamtperiodendauer gesetzt werden und der Zähler 46 auf einen um eine Stelle verschobenen Wert entsprechend der halben Gesamtperiodendauer. Mit dem Setzen der Zähler 40, 42, 44 und 46, die somit gleichzeitig Speicher für die in diesem Augenblick erreichte Zählerstellung des Zählers 30 darstellen, gehen die Signale an den Ausgängen 41, 43, 45 und 47 dieser Zähler auf Null, wie in Fig. 5b dargestellt ist. Da die Ausgänge 41, 43 und 45 auf einen Zählfreigabe-eingang des jeweils folgenden Zählers gehen, zählt zu Beginn nur der Zähler 40 das Taktsignal 21, das im übrigen den Zähleingängen auch der anderen Zähler zugeführt wird.

Wenn der Zähler 40 nach einem Achtel der Gesamtperiodendauer, d.h. etwa in der Mitte der ersten Unterperiode, seine Nullstellung wieder erreicht hat und das Signal am Ausgang 41 wieder hoch wird, wird dieser Zähler durch dieses Ausgangssignal gesperrt und andererseits der Zähler 42 freigegeben, der nun während einem Viertel der Gesamtperiodendauer zählt und somit nach drei Achtel der Gesamtperiodendauer, d.h. in der Mitte der zweiten Unterperiode, seine Nullstellung erreicht, wodurch das Signal am Ausgang 43 hoch wird. Dieses Signal ist andererseits auch das erste Abtastsignal S1, das dem Takteingang eines flankengesteuerten D-Flipflops 50 zugeführt wird, dessen D-Eingang von der Leitung 1a das invertierte Signal des Datenbusses 1 erhält. Da letzteres in diesem Augenblick niedrig ist, ist das invertierte Signal hoch, und das D-Flipflop 50 wird gesetzt, wodurch der Ausgang 51 ein hohes Signal "Bus belegt" führt. Dieses Signal wird u.a. auch der Verarbeitungseinheit 100 zugeführt, die hier nur schematisch angedeutet ist und die dieses Signal für entsprechende Steuerzwecke verwenden kann.

Das hohe Signal am Ausgang 43 sperrt einerseits ein weiteres Zählen des Zählers 42 und gibt andererseits das Zählen des Zählers 44 frei, der nach einem Viertel der Gesamtperiodendauer, d.h. etwa in der Mitte der zweiten Teilperiode, seine Nullstellung erreicht und dann am Ausgang 45 ein hohes Signal erzeugt. Dieses Signal sperrt das weitere Zählen des Zählers 44 und stellt andererseits das zweite Abtastsignal S2 dar, das dem einen Eingang eines UND-Gliedes 52 zugeführt wird, dessen anderer Eingang das "Bus belegt" Signal auf der Leitung 51 erhält und dessen Ausgang mit dem Takteingang eines weiteren flankengesteuerten D-Flipflops 54 verbunden ist. Da das Abtastsignal S2 in der hier dargestellten Anordnung allerdings im normalen Ablauf nur dann auftreten kann, wenn das "Bus belegt" Signal vorhanden ist, dient das UND-Glied 52 hier im wesentlichen als Sicherheit gegen gestörte oder fälschlich ausgelöste Abläufe der Zählanordnung aus den Zählern 40, 42 und 44 und kann gegebenenfalls auch weggelassen werden, wobei dann das Abtastsignal S2 direkt auf den Takteingang des D-Flipflops 54 führt.

Der D-Eingang des Flipflops 54 ist ebenfalls mit der Leitung 1a verbunden, die das invertierte Signal auf den Datenbus 1 führt. Das D-Flipflop 54 wertet also das Signal auf dem Datenbus etwa in der Mitte der zweiten Teilperiode aus, in der das Signal also von dem logischen Wert des auf dem Datenbus 1 übertragenen Datenbits bestimmt wird, so daß am Ausgang 55 des Flipflops 54 ein Signal entsprechend diesem logischen Wert erscheint, der der Verarbeitungsanordnung 100 zugeführt wird. In Zeile 55 in Fig. 5b ist das Einschreiben des Datenbitwertes auf dem Datenbus 1 durch die Kreuzung der beiden Linien angedeutet.

Das Abtastsignal S2 führt außerdem auf eine Verzögerungsstufe 56, die am Ausgang 57 ein gegenüber dem Abtastsignal S2 verzögertes Signal abgibt und der Verarbeitungseinheit 100 zuführt, um dieser anzugeben, ab wann ein über die Leitung 55 zugeführtes Datensignal gültig ist. Dieses verzögerte, als Datentakt bezeichnete Signal auf der Leitung 57 ist in Fig. 5b der Einfachheit halber nur durch einen senkrechten Strich angedeutet.

Mit der nächsten negativen Flanke des Signals auf dem Datenbus 1 zum Zeitpunkt t2 wiederholen sich die gleichen Vorgänge zur Auswertung des nächsten übertragenen Datenbits. Die zum Zeitpunkt t2 beginnende Gesamtperiode möge gleichzeitig die letzte des betreffenden Übertragungsvorganges sein, und sie endet zum Zeitpunkt t3, bei dem nun also keine negative Flanke im Signal auf dem Datenbus 1 mehr auftritt. Nun kann sich der Zähler 46 auswirken, der bereits vorher jeweils zu zählen begonnen hatte, wenn der Zähler 44 seine Nullstellung erreicht hatte, jedoch hat der Zähler 46 bisher nicht seine Nullstellung erreichen können, da diese erst eine halbe Gesamtperiodendauer nach der positiven Flanke des Signals auf der Leitung 45 auftreten würde, d.h. etwa ein Achtel der Gesamtperiodendauer nach dem Beginn der nächsten folgenden Gesamtperiode, wodurch der Zähler 46 vorher wieder bereits in eine Stellung entsprechend der vom Zähler 30 am Ende einer Gesamtperiode erreichten Stellung gesetzt wurde. Da zum Zeitpunkt t3 jedoch nun keine neue Gesamtperiode beginnt, wird der Zähler 46 nicht wieder erneut gesetzt und kann seine Nullstellung nach dem Ende der letzten Gesamtperiode der abgeschlossenen Datenübertragung erreichen, so daß das Signal am Ausgang 47 wieder hoch wird. Dadurch wird nun das D-Flipflop 50 zurückgesetzt, so daß das "Bus belegt" Signal auf der Leitung 51 wieder niedrig wird, und außerdem erhält das flankengesteuerte D-Flipflop 48 eine positive Signalflanke am Takteingang, so daß dieses Flipflop wieder umkippt und die Leitung 49 wieder ein niedriges Signal annimmt. Damit ist die Anordnung wieder in die Ruhelage zurückgekehrt und kann den Beginn einer neuen Datenübertragung auswerten.

Die in Fig. 4 dargestellte Anordnung enthält ferner einen Teil, der das Signal auf der Leitung 15 für die Sendeanordnung nach Fig. 3 erzeugt. Dieser Teil enthält eine bistabile Kippstufe, die zwei kreuzweise gekoppelte NOR-Glieder 62 und 64 enthält, wobei das letztere das Signal auf der Leitung 15 erzeugt. Der andere Eingang des NOR-Gliedes 62 ist mit dem Ausgang eines UND-Gliedes 60 verbunden, dessen einer Eingang mit der Leitung 53 verbunden ist, die bei nicht belegtem Bus, d.h. bei rückgesetztem D-Flipflop 50, ein Signal führt, das invers zu dem "Bus belegt" Signal auf der Leitung 51 ist. Der andere Eingang des UND-Gliedes 60 ist mit einer Leitung 69 verbunden, die von der Verarbeitungseinheit 100 kommt und die ein Signal entsprechend einer logischen "1" führt, wenn die Verarbeitungseinheit 100 auszusendende Daten enthält, wobei gegebenenfalls noch weitere Bedingungen berücksichtigt sein können. Diese Leitung 69 führt ferner über einen Inverter 68 auf den einen Eingang eines weiteren UND-Gliedes 66, von dem ein anderer Eingang das "Bus frei" Signal auf der Leitung 51 und von dem ein weiterer Eingang das zweite Abtastsignal S2 auf der Leitung 45 erhält. Die Funktion dieser Anordnung wird anhand der Fig. 5c erläutert.

Es wird angenommen, daß das Signal auf der Leitung 69, das den Wunsch der Verarbeitungseinheit 100 zum Aussenden von Daten signalisiert, zu einem beliebigen Zeitpunkt auftreten kann, was durch die mehrfachen Flanken des entsprechenden Signals in Fig. 5c links angedeutet ist. Wenn dieses Signal bei belegtem Bus auftritt, d.h. wenn das Signal auf der Leitung 51 noch hoch ist, muß der Datenbus erst frei werden und das entsprechende Signal auf der Leitung 51 niedrig werden, wodurch das Signal auf der Leitung 53 hoch wird. Sobald dies geschieht oder sobald bei einem hohen Signal auf der Leitung 53 bei nicht belegtem Bus das Signal auf der Leitung 69 auftritt, erzeugt das UND-Glied 60 am Ausgang eine logische "1". Damit erzeugt das NOR-Glied 62 unabhängig vom Signal am anderen Eingang am Ausgang eine logische "0". Da in diesem Augenblick das UND-Glied 66 sowohl über die Leitung 51 als auch vom Inverter 68 ein niedriges Signal erhält, erzeugt es am Ausgang eine logische "0", so daß das NOR-Glied 64 an beiden Eingängen ein derartiges Signal erhält und am Ausgang und damit auf der Leitung 15 eine logische "1" erzeugt. Sobald nun die Ablaufsteuerung 4 in Fig. 3 am Ausgang 3 ein Signal erzeugt hat und die nächste Flanke des Taktsignals 21 auftritt, wird ein niedriges Signal auf dem Datenbus 1 erzeugt, wobei vorausgesetzt wird, daß der Schalter 22 in der unteren Lage steht, d.h. zwischen aufeinanderfolgenden Datenübertragungen ist das Signal auf dem Datenbus hoch. Das niedrige Signal dauert wie beschrieben die Hälfte der Dauer der Gesamtperiode, da in der ersten Periode noch kein Datum übertragen werden kann, da zunächst die Dauer der Periode in allen empfangenden Stationen ausgewertet werden muß. Im übrigen wirkt der andere Teil der Fig. 4 in gleicher Weise wie vorher beschrieben auch als Empfänger, da die Anordnung nicht unterscheiden kann, von welcher Quelle die Signale auf dem Datenbus kommen. Damit beginnen in der nächsten Periode in Fig. 5c wieder die Zähler 40, 42, 44 und 46 zu arbeiten, und auch die Leitung 51 ändert ihren Zustand und zeigt einen belegten Bus an. Ferner hat das Signal auf dem Datenbus 1 in der zweiten Teilperiode dieser und der nächsten Gesamtperiode einen Wert, der vom logischen Wert des zu übertragenden Datenbits abhängt, was durch ein schraffiertes Feld in dem betreffenden Signal auf dem Datenbus 1 in Fig. 5c angedeutet ist. Auch das Datentaktsignal auf der Leitung 57 wird wie vorher beschrieben erzeugt und kann dazu dienen, das nächste zu übertragende Datenbit über die Leitung 11 in Fig. 3 dem UND-Glied 14 zuzuführen.

Zur Vereinfachung der Darstellung wird angenommen, daß nur zwei Datenbit zu übertragen sind. Das Signal auf der Leitung 69 kann daher zu irgendeinem Zeitpunkt während der dritten Gesamtperiode, in der das zweite und damit letzte Datenbit übertragen wird, verschwinden, wie in Fig. 5c durch die mehrfach angedeuteten Flanken in dem erlauf dieses Signals gezeigt ist. Das Verschwinden dieses Signals bzw. der Übergang auf den logischen Wert "0" wirkt sich auf das UND-Glied 60 nicht aus, da dieses bereits vorher über die Leitung 53 eine logische "0" erhalten hat.

Andererseits hat das Signal auf der Leitung 51 den logischen Wert "1", und ein zweiter Eingang des UND-Gliedes 66 erhält nun über den Inverter 68 ebenfalls ein Signal entprechend dem logischen Wert "1". Wenn nun das zweite Abtastsignal S2 auftritt, liefert das UND-Glied 66 am Ausgang eine logische "1", wodurch über das NOR-Glied 64 das Signal auf der Leitung 15 wieder niedrig wird. Daraus wird klar, daß das Signal auf der Leitung 69 spätestens bis zum Ende der betreffenden Periode auf den logischen Wert "0" gegangen sein muß, um zu verhindern, daß eine neue Periode mit einem weiteren Signalübergang auf dem Datenbus 1 auftritt.

Nachdem das Signal auf der Leitung 69 wieder auf den logischen Wert " 0" gegangen ist und kein weiterer Signalübergang auf dem Datenbus 1 auftritt, kann der Zähler 46 nach dem Ende der dritten Periode seine Nullstellung erreichen, wodurch das Signal auf der Leitung 47 wieder hoch geht und das D-Flipflop zurückschaltet, wodurch wiederum das " Bus belegt" Signal auf der Leitung 51 wieder niedrig wird. Damit ist die Datenübertragung abgeschlossen, und es kann sich der Empfang einer anderen Datenübertragung oder der Beginn einer weiteren Datenübertragung von dieser Station aus anschließen.

Beschreibung Einer Weiteren Anordnung Für Die Auswertung Des Datenbussignals

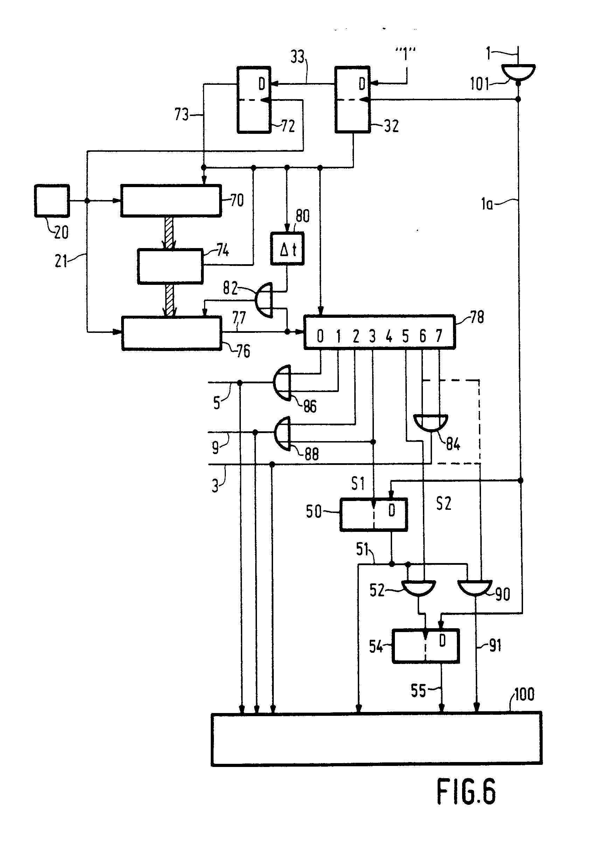

In Fig. 6 ist eine andere Anordnung zum Empfang und zur Auswertung der Signale auf dem Datenbus 1 dargestellt. Diese Sigale vom Datenbus 1 werden wieder über den invertierenden Verstärker 101 auf die Leitung la gegeben, wo dem logischen Wert "1" auf dem Datenbus 1 ein hohes Signal entspricht. Dieses führt in gleicher Weise wie in Fig. 4 auf den Takteingang des flankengesteuerten D-Flipflops 32 und die D-Eingänge der D-Flipflops 50 und 54. Mit der negativen Flanke eines Signals auf dem Datenbus 1, d.h. mit der positiven Flanke des Signals auf der Leitung 1a, wird das D-Flipflop 32 gesetzt und erzeugt ein hohes Signal auf der Leitung 33. Dieses führt hier jedoch auf den D-Eingang eines weiteren D-Flipflops 72, das am Takteingang das Taktsignal auf der Leitung 21 erhält und somit bei der nächsten Vorderflanke dieses Taktsignals am Ausgang 73 ein hohes Signal erzeugt. Dieses setzt das D-Flipflop 32 zurück und einen Zähler 70 auf eine Anfangsstellung, und gleichzeitig wird der zuletzt erreichte Zählerstand des Zählers 70 in ein Register 74 eingeschrieben. Hier wird also das Abspeichern des Zählerstandes des Zählers 70 und dessen Rücksetzung auf einen gemeinsamen Zeitpunkt gelegt, was bei vielen handelsüblichen Zähler- und Registerbausteinen durchaus möglich ist, und außerdem wird auf das Sperren der Zählung des Zählers 70 in diesem Zeitpunkt verzichtet. Der Zähler 70 entspricht dabei dem Zähler 30 in Fig. 4 und hat auch die selbe Funktion.

Die Leitung 73 führt ferner auf eine Verzögerungsstufe 80, die kurze Zeit nach dem positiven Signal auf der Leitung 73 ein Ausgangssignal erzeugt, das über das ODER-Glied 82 dem Setz oder Ladeeingang eines weiteren Zählers 76 zugeführt wird, der mit diesem Signal das Ausgangssignal des Registers 74 übernimmt. Die Verzögerungszeit der Verzögerungsstufe 80 muß also mindestens der Laufzeit der Signale in dem Register 74 entsprechen. Der Zähler 76 zählt nun mit dem Taktsignal 21 rückwärts, bis er wieder die Anfangsstellung erreicht hat, wodurch ein Signal am Ausgang 77 erscheint. Dieser Ausgang ist über das ODER-Glied 82 wieder mit dem Setzeingang des Zählers 76 sowie mit dem Zähleingang eines weiteren Zählers 78 verbunden. Durch die erstere Verbindung wird der Zähler also wieder auf die im Register 74 enthaltene Stellung gesetzt und zählt wieder rückwärts, und dieser Vorgang wiederholt sich mehrmals.

Diese mehrmalige Wiederholung erfolgt dadurch, daß das Register 74 nicht den Zählerstand des Zählers 70 unmittelbar übernimmt, sondern den um drei Binärstellen verschobenen Zählerstand, wobei die drei letzten Bits geringster Wertigkeit wegfallen. Stattdessen kann auch das Register 74 den vollständigen Zählerstand übernehmen und diesen um drei Stellen verschoben dem Zähler 76 zuführen. In jedem Falle wird der Zähler 76 auf eine Stellung gesetzt, die etwa einem Achtel der Zählerstellung des Zählers 70 entspricht, so daß der Zähler 76 während aufeinanderfolgender Gesamtperioden der Signale auf dem Datenbus achtmal gesetzt wird und auf die Anfangsstellung zurückläuft. Tatsächlich erfolgen etwas mehr als acht Umläufe des Zählers 76 in einer Periode, da die letzten Stellen der Zählerstellung des Zählers 70 nicht berücksichtigt werden, jedoch tritt bei einer Folge gleich langer Gesamtperioden, wie dies bei einer Datenübertragung auftritt, kurz nach Beginn des neunten Umlaufes des Zählers 76 ein Signal am Ausgang der Verzögerungsstufe 80 aufgrund des Beginns der nächsten Periode des Signals auf dem Datenbus 1 auf, so daß der Zähler 76 dann wieder erneut auf die von der Zählerstellung des Zählers 70 abgeleitete Stellung gesetzt und damit wieder erneut synchronisiert wird.

Der Zähler 78 erhält bei jedem Durchlauf des Zählers 76, wenn dieser wieder seine Anfangsstellung erreicht, einen Zähltakt, und er hat mindestens acht Zählerstellungen sowie für jede Zählerstellung einen entsprechend bezeichneten Ausgang, an dem ein hohes Signal erscheint, wenn sich der Zähler in der gleichbezeichneten Zählerstellung befindet. Zu Beginn einer Periode des Signals auf dem Datenbus 1 wird der Zähler 78 durch das Signal auf der Leitung 73 auf die Stellung 0 gesetzt. Da der Zähler 76 nach jeweils einem Achtel der Dauer der Gesamtperiode ein Signal am Ausgang 77 abgibt, entsprechen die Stellungen 0 und 1 des Zählers 78 der ersten Unterperiode, die Stellungen 2 und 3 der zweiten Unterperiode und die Stellungen 4 und 5 der zweiten Teilperiode. Dabei beginnt die Zählerstellung 3 etwa in der Mitte der zweiten Unterperiode und bildet somit das erste Abtastsignal S1, und die Zählerstellung 5 beginnt etwa in der Mitte der zweiten Teilperiode und bildet somit das zweite Abtastsignal S2.

Das Abtastsignal S1 führt auf den Takteingang eines flankengesteuerten D-Flipflops 50, dessen D-Eingang mit der Leitung 1a verbunden ist und das dem D-Flipflop 50 in Fig. 4 in der Funktion entspricht, d.h. an dessen Ausgang 51 erscheint wieder das "Bus belegt" Signal. Dieses wird sowohl der Verarbeitungseinheit 100 als auch den einen Eingängen der UND-Glieder 52 und 90 zugeführt. Das erstere erhält am anderen Eingang das zweite Abtastsignal S2 und führt auf den Takteingang des flankengesteuerten D-Flipflops 54, dessen D-Eingang ebenfalls mit der Leitung 1a verbunden ist und das dem gleichbezeichneten D-Flipflop in Fig. 4 entspricht, d.h. am Ausgang 55 erscheint ein Signal entsprechend dem über den Datenbus 1 übertragenen Datenbitwert, das ebenfalls der Verarbeitungseinheit 100 zugeführt wird. Das UND-Glied 90 erhält am anderen Eingang ein Signal, das nach dem zweiten Abtastsignal S2 auftritt, beispielsweise das Signal am Ausgang 6 oder am Ausgang 7 des Zählers 78 oder die Zusammenfassung beider Ausgangssignale am Ausgang des ODER-Gliedes 84, was durch die gestrichelten Linien angedeutet ist, und am Ausgang 91 des UND-Gliedes 90 erscheint ein Signal, das angibt, daß das auf der Leitung 55 vorhandene Datensignal gültig ist und das deshalb mit "Datentaktsignal" bezeichnet und der Verarbeitungseinheit 100 zugeführt wird. Im Gegensatz zur Anordnung nach Fig. 4 ist hier das UND-Glied 52 notwendig, da die Abtastsignale S1 und S2 ständig, d.h. auch außerhalb einer Datenübertragung, erzeugt werden. Dies gilt auch für das hier für den Datentakt verwendete UND-Glied 90.

Wie bereits erwähnt, sind bei der Anordnung nach Fig. 6 die beiden Ausgänge des Zählers 78 für die Zählerstellungen 6 und 7 über das ODER-Glied 84 zusammengefaßt, und dessen Ausgang ist ebenso wie ein Ausgang der Ablaufsteuerung 4 in Fig. 3 mit 3 bezeichnet, da bei der Anordnung nach Fig. 6 an diesem Ausgang ebenfalls in der dritten Teilperiode, also vor Beginn der ersten Unterperiode der folgenden Gesamtperiode, ein Signal erscheint, das dem UND-Glied 10 und damit dem D-Eingang des D-Flipflops 6 in Fig. 3 zugeführt werden kann. Das Taktsignal auf der Leitung 21' ist zweckmäßig von dem Signal auf der Leitung 77 in Fig. 6 abgeleitet, so daß mit dem Übergang des Zählers 78 auf die Stellung 0 das D-Flipflop 6 in Fig. 3 gesetzt wird und über den Umkehrverstärker 18 ein niedriges Signal entsprechend einer logischen "1" auf dem Datenbus 1 erzeugt. Dies gibt den Beginn einer neuen Periode an, bei der der Zähler 78 durch das Rücksetzen über die Leitung 73 in die Stellung 0 gesetzt wird, in der er sich jedoch bereits befindet, so daß auf diese Weise automatisch Synchronismus zwischen Senden und Empfangen besteht.

In entsprechender Weise sind die den Zählerstellungen 0 und 1 des Zählers 78 entsprechenden Ausgänge über das ODER-Glied 86 zusammengefaßt, dessen Ausgang mit 5 bezeichnet ist, und die Ausgänge für die Zählerstellungen 3 und 4 sind über das ODER-Glied 88 zusammengefaßt, dessen Ausgänge mit 9 bezeichnet sind. Alle Ausgänge 3, 5 und 9 werden wie in Fig. 3 dargestellt angeschlossen, so daß also die dort dargestellte Ablaufsteuerung 4 wegfallen kann bzw. durch den Zähler 78 in Fig. 6 ersetzt ist. Auf diese Weise ergibt sich eine besonders einfache und kostensparende Anordnung, bei der außerdem beim Aussenden von Daten von der betreffenden Station, von der die Anordnung nach Fig. 6 einen Teil bildet, eine leichte Synchronisation der Periodendauer beim Senden an die Periodendauer eines vorher über den Datenbus empfangenen Signals erfolgt. Die Ausgänge 3, 5 und 9 sind ferner mit der Verarbeitungseinheit 100 verbunden, um dieser eine besonders einfache Steuerung des Sendesteuersignals auf der Leitung 17 in Fig. 3 zu ermöglichen.

Die in den Fig. 3 und 4 oder 6 dargestellten Anordnungen enthalten Verknüpfungsglieder, D-Flipflops und Zähler, die beispielsweise als integrierte Schaltungen verfügbar sind. Diese Elemente können jedoch auch durch einen Microprozessor realisiert werden, der sowohl die Rolle des Senders zur Ansteuerung des Umkehrverstärkers 18 in Fig. 3 als auch die Rolle des Empfängers gemäß den Anordnungen in Fig. 4 oder 6 übernehmen kann. Dies ist besonders dadurch einfach möglich, wenn von einer relativ geringen Datenübertragungsgeschwindigkeit von beispielsweise einigen kHz oder noch weniger ausgegangen wird. Der Microprozessor kann dann auch noch die Funktion der Verarbeitungseinheit 100 übernehmen, wodurch sich eine sehr preisgünstige Realisierung ergibt. Die einzelnen Funktionen werden dabei durch ein Programm ausgeführt, das die in Fig. 3 und 4 oder 6 beschriebenen Elemente durch die entsprechenden Elemente des Microprozessors im Zeitmultiplex realisiert und das in einem Speicher gespeichert ist, der bei der Herstellung des Microprozessors mit diesem zusammen auf einer einzigen Halbleiterscheibe erzeugt wird.

Beschreibung von Ablaufsteuerungen zum Senden und Empfangen

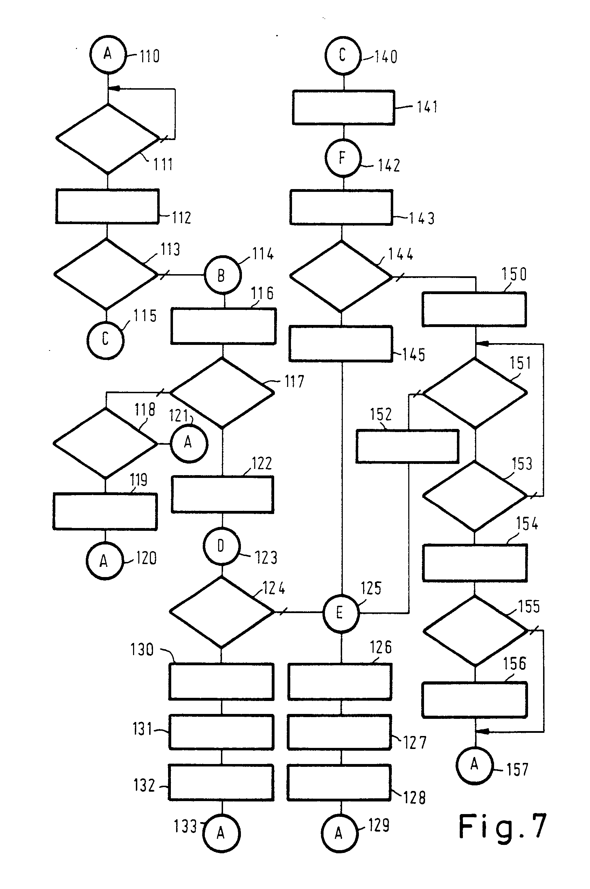

In Fig. 7 ist ein Flußdiagramm für die Programmierung eines Microprozessors dargestellt, wenn dieser das Aussenden bzw. Empfangen von Informationen in einer Station durchführt, wobei davon ausgegangen wird, daß von irgendeiner Stelle ständig in der ersten Unterperiode U1 in Fig. 2 ein niedriges Signal auf dem Datenbus erzeugt wird.

Der Ablauf beginnt am Punkt 110, der mit A bezeichnet ist, der jedoch kein Startpunkt im eigentlichen Sinne ist, da die in Fig. 7 dargestellten Abläufe ständig zyklisch wiederholt durchlaufen werden. Danach folgt im Block 111 die Abfrage, ob der Datenbus ein niedriges Signal führt. Statt dessen kann auch mit dem Übergang auf ein niedriges Signal auf dem Datenbus ein Unterbrechungssignal ausgelöst werden, wobei der Block 111 dann eine Warteschleife darstellt und das Unterbrechungssignal einen Sprung auf den Ausgang der Warteschleife bewirkt.

Mit dem Übergang auf ein niedriges Signal auf dem Datenbus ist der Beginn einer neuen Periode gekennzeichnet, und im Block 112, der dadurch durchlaufen wird, wird der Inhalt eines Zeitzählers in ein Zeitregister übertragen und der Zeitzähler auf Null zurückgesetzt. Das Zeitregister enthält somit ein Maß für die Dauer der vorangegangenen Periode.

Im folgenden Block 113 wird der Zustand eines Merkers abgefragt, der entscheidet, ob sich die Station im Sendezustand oder im Empfangszustand befindet. Falls die Station im Sendezustand ist, geht der Ablauf über den mit C bezeichneten Punkt 115, dessen Fortsetzung später erläutert wird. Im Ruhezustand befindet sich die Station jedoch im Empfangszustand, und der Ablauf geht über den mit B bezeichneten Punkt 114 weiter zum Block 116, in dem abgewartet wird, bis der Zeitzähler einen Wert von 3/8T erreicht, wobei T der Inhalt des Zeitregisters ist. Dieser Zeitpunkt liegt in der Mitte der zweiten Unterperiode U2, in der der Signalzustand auf dem Datenbus angibt, ob der Bus frei ist oder ob gerade eine andere Station eine Über tragung durchführt. Im Block 117 wird daher geprüft, ob das Signal auf dem Datenbus niedrig ist. Wenn dies nicht der Fall ist, wird von keiner Station eine Übertragung durchgeführt, so daß in der hier betrachteten Station geprüft werden kann, ob eine Übertragung erforderlich ist, d.h. ob zu übertragende Informationen vorliegen. Wenn dies nicht der Fall ist, geht der Ablauf über den Punkt 121, der der Übersichtlichkeit halber mit A bezeichnet ist, wieder zum Punkt 110 zurück, wodurch die beim Block 111 angegebene Schleife durchlaufen wird, bis das Signal auf dem Datenbus wieder niedrig wird, d.h. bis eine neue Periode beginnt. Damit wird der beschriebene Ablauf wiederholt, und zwar so lange, wie keine Übertragung von irgendeiner Station stattfindet.

Wenn dagegen von der hier betrachteten Station eine Informationsübertragung beginnen soll, wird nach der entsprechenden Abfrage im Block 118 der Block 119 durch laufen, bei dem der bereits erwähnte Merker gesetzt wird. Dieser Merker kann auch ein Zähler sein, zu dessen Inhalt im Block 119 eine Einheit aufaddiert wird. Danach wird nämlich über den Punkt 120, der ebenfalls mit A bezeichnet ist, auf den Punkt 110 zurückgegangen und mit dem Beginn der nächsten Periode wieder die Abfrage im Block 113 durchlaufen, in der nun geprüft werden kann, ob der Merkzähler einen bestimmten Wert erreicht hat. Abhängig von diesem Wert kann der jeweiligen Station nämlich eine Priorität zugeordnet werden, d.h. bei einem größeren Wert müssen nach dem Ende einer vorangegangenen Übertragung mehrere Perioden durchlaufen werden, bis die betreffende Station schließlich den vorgegebenen Wert im Merkzähler erreicht hat, so daß eine andere Station mit einem kleineren Wert früher mit der

Übertragung beginnen kann und damit alle anderen Stationen zunächst sperren kann.

Zunächst wird jedoch angenommen, daß eine andere Station eine Übertragung begonnen hat, so daß bei der Abfrage im Block 117, die also in der Mitte der zweiten Unterperiode U2 stattfindet, ein niedriges Signal auf dem Datenbus festgestellt wird, das den Datenbus als belegt kennzeichnet, so daß anschließend auf den Block 122 übergegangen wird, in dem der Merkzähler auf seinen Anfangswert zurückgesetzt wird, wobei sich diese Notwendigkeit aus der vorstehenden Erläuterung ergibt. Danach wird über den Punkt 123, der mit D bezeichnet ist, auf den Block 124 übergegangen, in dem geprüft wird, ob die betreffende Station, die gerade passiv ist und nicht aussendet, im Rahmen eines Informationsaustausches mit der gerade sendenden Station eine Information an diese aktiv zurücksenden soll, wie dies früher beschrieben wurde. Wenn dies nicht der Fall ist, d.h. die hier betrachtete Station empfängt lediglich, wird über den mit E bezeichneten Punkt 125 auf den Block 126 übergegangen, bei dem gewartet wird, bis der Zeitzähler den Wert 5/8T erreicht hat, denn dies ist die Mitte der Teilperidoe T2 gemäß Fig. 2, in der der Wert des zu übertragenden Informationsbits als Signal auf dem Datenbus erscheint. Wenn dieser Zeitpunkt erreicht ist, wird im Block 127 dieser Wert in ein Datenregister oder Datenspeicher übernommen, und anschließend wird im Block 128 gewartet, bis der Zeitzähler mindestens den Wert 3/4T erreicht hat, zu dem das Signal auf dem Datenbus hoch ist. Danach wird über den Punkt 129, der ebenfalls mit A bezeichnet ist, auf den Punkt 110 zurückgegangen, um das nächste Datenbit zu empfangen.

Falls vorgesehen ist, daß während eines Informationsaustausches die zunächst empfangende Station auch Informationen zur sendenden Station zurücksenden kann, und im Block 124 ist festgestellt worden, daß die hier betrachtete empfangende Station durch die empfangene Information entsprechend vorbereitet ist, wird zum Block 130 gegangen, in dem der Wert des zu übertragenden Informationsbit als Signal durch entsprechende Ansteuerung des Verstärkers 18 in Fig. 3 über den Datenbus 1 übertragen wird. Dabei ist die zweite Teilperiode 2 zwar noch nicht erreicht, die der Datenübertragung zugeordnet ist, jedoch wird auf diese Weise verhindert, daß beim Übergang auf diese Teilperiode 2 ein falscher, wenn auch nur kurzzeitiger Signalübergang auf den Datenbus erzeugt wird. Ein solcher Signalübergang kann dadurch entstehen, daß die sendende Station ein hohes Signal auf dem Datenbus erzeugt bzw. den Ausgangsverstärker in einen hochohmigen Zustand setzt, damit die hier betrachtete Station das Signal auf dem Datenbus bestimmen kann, jedoch erst ein niedriges Signal erzeugt, nachdem das hohe Signal auf dem Datenbus aufgetreten ist. In jeder Periode darf nämlich nur eine negative Flanke auftreten, und zwar zu Beginn der periode. In dem folgenden Block 131 wird gewartet, bis der Zeitzähler den Wert 3/4T erreicht, während der Signalzustand auf dem Datenbus aufrechterhalten wird. Wenn dieser Zeitpunkt erreicht ist, ist die Teilperiode T2 beendet, und nun beginnt die letzte Teilperiode T3, in der wieder ein hohes Signal auf dem Datenbus erzeugt wird. Dies erfolgt im Block 132. Danach wird über den Punkt 133, der wieder mit A bezeichnet ist, auf den Punkt 110 zurückgegangen und auf den Beginn der nächsten Periode gewartet.

Wenn in der hier betrachteten Station ein Sendewunsch vorliegt und beim Durchlaufen der Abfrage im Block 113 zu Beginn einer neuen Periode festgestellt wird, daß der entsprechende Merker gesetzt ist bzw. der Merkerzähler den vorgegebenen Wert erreicht hat, wird von dem Punkt 115 über den Punkt 140, der ebenfalls mit C bezeichnet ist, auf den Block 141 übergegangen, durch den ein niedriges Potential auf dem Datenbus erzeugt wird. Dies erfolgt zwar zu Beginn der ersten Unterperiode U1, während der bereits ein niedriges Potential auf dem Datenbus vorhanden ist, jedoch wird von der hier betrachteten Station dieses niedrige Signal, um den Datenbus als belegt zu kennzeichnen, auch während der zweiten Unterperiode durchgehend aufrechterhalten, so daß in entsprechender Weise wie vorher beschrieben erreicht wird, daß keine störenden Flanken in dem Signal auf dem Datenbus auftreten. Dann wird über den mit F bezeichneten Punkt 142 auf den Block 143 übergegangen, in dem gewartet wird, bis der Zeitzähler den Wert 1/2T erreicht hat, von an die Übertragung eines Informationsbits beginnt.

Danach folgt im Block 144 die Abfrage, ob eine andere Station, die von der hier betrachteten Station angesprochen wurde, Daten zurückübertragen soll. Wenn tatsächlich eine Übertragung von der anderen, angesprochenen Station zurück zur hier betrachteten Station erfolgen soll, muß im Block 145 der an den Datenbus angeschlossene Verstärker hochohmig gemacht werden, so daß das Signal auf dem Datenbus nun nur von der anderen Station bestimmt werden kann, und danach wird über den Punkt 125, der mit E bezeichnet ist, auf den bereits beschriebenen Ablauf zum Empfangen von Informationsbits übergegangen.

Falls im Block 144 festgestellt wird, daß keine Übertragung von der anderen Station zur hier betrachteten Station erfolgen soll, d.h. diese soll normal weiter senden, wird auf den Block 150 übergegangen, in dem ein Signal entsprechend dem zu übertragenden Datenbit auf den Datenbus gegeben wird. Der Ablauf geht dann weiter auf den Block 151, wo geprüft wird, ob das Signal auf dem Datenbus dem Signal entspricht, das in der hier betrachteten Station durch das gerade übertragene Informationsbit erzeugt wird. Es ist nämlich möglich, daß zwei oder auch noch mehr Stationen genau gleichzeitig mit der selben Periode eine Übertragung begonnen haben. Diese Tatsache kann zunächst von den gleichzeitig sendenden Stationen nicht ohne weiteres erkannt werden, da keine Station feststellen kann, daß das Signal auf dem Datenbus außer durch den eigenen Ausgangsverstärker durch einen entsprechenden Verstärker in einer anderen Station niedrig gemacht wurde. Wenn jedoch bei der aufeinanderfolgenden Übertragung von Bits, die beispielsweise aus der Adresse der sendenden Station bestehen können, eine andere Station ein niedriges Signal auf dem Datenbus erzeugt, während der von der hier betrachteten Station ausgesendeten Information ein hohes Potential entspricht, kann diese Station nun feststellen, daß noch mindestens eine andere Station gleichzeitig sendet, und sie muß sich aus dem Sendezustand herausbegeben, damit Störungen der von den anderen sendenden Stationen ausgesandten Signale vermieden werden. Auf diese Weise bleibt schließlich nur eine sendende Station übrig, die am häufigsten während der zweiten Teilperiode T2, während der die Daten übertragen werden, ein niedriges Signal aussendet.

Die hier betrachtete unterlegene Station muß nun aber in den Empfangszustand übergehen, denn es ist möglich, daß die sendende Station, die schließlich übrig bleibt, die hier betrachtete Station anspricht. Aus diesem Grunde wird, wenn im Block 151 festgestellt wird, daß das Signal auf dem Datenbus nicht dem eigenen ausgesendeten Signal entspricht, der Block 152 durchlaufen, in dem der Merker bzw. Merkzähler für dem Sendezustand auf die Anfangsstellung zurückgesetzt wird, womit die Station den Sendezustand verläßt, und der weitere Ablauf geht über den Punkt 125 wieder in den Empfangszweig aus den Blökken 126 bis 128 über.

Wenn im Block 151 jedoch zunächst festgestellt wird, daß das Signal auf dem Datenbus dem ausgesendeten Datenbit entspricht, wird im Block 153 geprüft, ob der Zeitzähler den Wert 3/4T erreicht hat, und solange dies noch nicht der Fall ist, wird auf den Block 151 zurückgegangen und auf diese Weise während der gesamten zweiten Teilperiode T2 geprüft, ob das Datensignal auf dem Datenbus dem ausgesendeten Signal entspricht. Wenn schließlich das Ende der zweiten Teilperidode T2 erreicht ist, wird auf den Block 154 übergegangen, der das hohe Signal auf dem Datenbus während der dritten Teilperiode T3 erzeugt, und im folgenden 155 wird geprüft, ob die Informations-übertragung beendet ist, d.h. ob alle auszusendenden Informationen übertragen worden sind. Solange dies nicht der Fall ist, geht der Ablauf über den Punkt 157, der wieder mit A bezeichnet ist, zum Punkt 110 weiter, wo der Beginn der nächsten Gesamtperiode abgewartet wird. Wenn jedoch die Übertragung beendet ist, wird der Block 156 durchlaufen, durch den der Merker bzw. Merkzähler auf den Anfangszustand gesetzt wird und der Sendezustand der betrachteten Station beendet wird. Der weitere Ablauf geht dann ebenfalls über den Punkt 157 auf den punkt 110. Auf diese Weise sind alle möglicherweise vorkommenden Zustände der Station berücksichtigt.

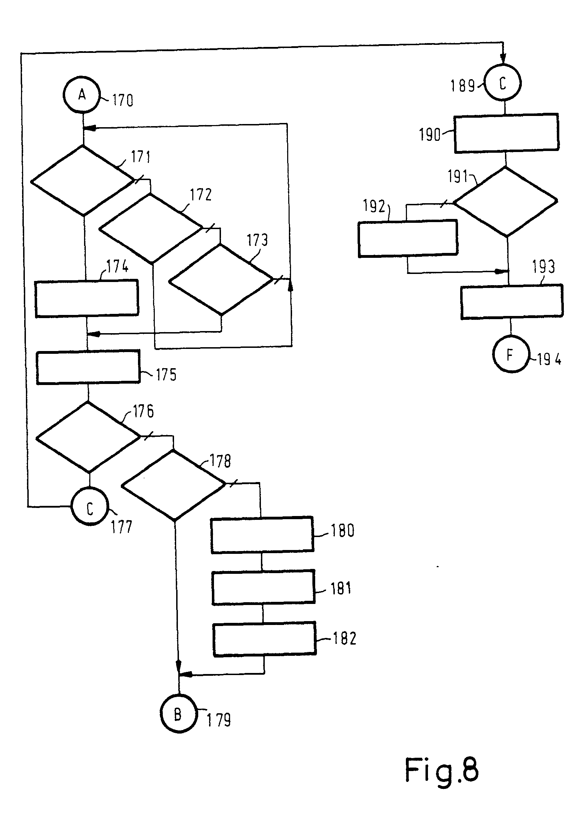

In Fig. 8 sind Änderungen des Ablaufs gegenüber dem in Fig. 7 dargestellt, wenn davon ausgegangen wird, daß kein besonderer Taktgeber an den Datenbus angeschlossen ist, der die einzelnen Perioden bzw. den Signalübergang am Beginn jeder Periode erzeugt, sondern jede Station, die Informationen ausgesendet hat, erzeugt anschließend das Signal für die Perioden, d.h. das niedrige Signal während der ersten Unterperiode U1, so lange weiter, bis eine andere Station zu senden beginnt und ihrerseits die Signale zur Bestimmung der Perioden erzeugt.

Lediglich beim Einschalten der Anlage aus den einzelnen über den Datenbus miteinander verbundenen Stationen muß eine der Stationen ohne vorherigen Übertragungsvorgang die Erzeugung der Signale zur Bestimmung der Perioden übernehmen. Dies kann einfach dadurch geschehen, daß das Rücksetzsignal, das beim Einschalten in üblicher Weise erzeugt wird, in dieser einen Station einen Merker setzt, der später erläutert wird, und das Zeitregister mit einem vorgegebenen Wert füllt. Mindestens diese Station enthält dann zweckmäßig eine hier nicht weiter ausgeführte Zeitüberwachung, die anspricht, wenn durch einen Fehler- oder Störungsfall das Erzeugen der Signale zur Bestimmung der Perioden ausfüllt, und dann den Vorgang wie beim Einschalten der Anlage auslöst.

Der dem Punkt 110 in Fig. 7 entsprechende Punkt ist hier der Punkt 170, der ebenfalls mit A bezeichnet ist. Zunächst wird der Block 171 durchlaufen, in dem ebenso wie beim Block 111 in Fig. 7 geprüft wird, ob das Signal auf dem Datenbus niedrig geworden ist. Falls dies nicht der Fall ist, wird hier jedoch der Block 172 durchlaufen, in dem der Zustand eines zweiten Merkers abgefragt wird, der gesetzt ist, wenn diese Station den Signalübergang zu Beginn jeder Periode erzeugen soll. Das Setzen und Löschen dieses Merkers wird später erläutert.

Wenn dieser Merker sich im Ruhezustand befindet, wird der Signalübergang zu Beginn jeder Periode also von einer anderen Station erzeugt, und es wird auf den Block 171 zurückgegangen, und dieser Ablauf wiederholt sich, bis der Signalübergang zu Beginn der nächsten Periode auftritt. Wenn im Block 172 jedoch festgestellt wird, daß der zweite Merker sich nicht im Ruhezustand befindet, d.h. die hier betrachtete Station muß den Signalübergang erzeugen, wird auf den Block 173 übergegangen, in dem geprüft wird, ob der Zeitzähler den im Zeitregister gespeicherten Wert T erreicht hat. So lange dies nicht der Fall ist, wird die Kette der Blöcke 171 bis 173 durchlaufen. Schließlich wird bei der Abfrage im Block 173 festgestellt, daß der Zeitzähler den Wert im Zeitregister erreicht hat, und danach wird ebenfalls auf den Block 175 übergegangen, bei dem das Übertragen des Inhalts des Zeitzählers in das Zeitregister zwar nicht erforderlich ist, sondern nur das Rücksetzen des Zeitzählers, jedoch aus Gründen der Einfachheit und Übersichtlichkeit wird dieser Block hier mit benutzt. Danach wird im Block 176 in entsprechender Weise wie im Block 113 geprüft, ob der erste Merker bzw. Merkzähler seinen vorgegebenen Wert enthält, und wenn dies zutrifft, wird über den Punkt 177, der mit C bezeichnet ist, weitergegangen, wie später erläutert wird.

Wenn jedoch der Sendezustand nicht oder noch nicht eingenommen ist, wird vom Block 176 auf den Block 178 übergegangen, wo geprüft wird, ob sich der zweite Merker im Ruhezustand befindet. Wenn dies der Fall ist, d.h. die hier betrachtete Station soll keinen Signalübergang am Anfang jeder Periode erzeugen, wird über den Punkt 179, der mit B bezeichnet ist, auf den entsprechend bezeichneten Punkt 114 in Fig. 7 übergegangen. Falls jedoch der zweite Merker gesetzt ist, wird vom Block 178 auf den Block 180 übergegangen, der bewirkt, daß ein niedriges Signal auf den Datenbus erzeugt wird. Dies ist für alle Stationen der Beginn einer neuen Übertragungsperiode. Im Block 181 wird abgewartet, bis der Zeitzähler den Wert 1/4T erreicht hat, d.h. das Ende der ersten Unterperiode erreicht ist, und danach wird im Block 182 der an den Datenbus angeschlossene Verstärker wieder hochohmig geschaltet, so daß im Normalfall der Datenbus wieder ein hohes Signal führt. Danach wird ebenfalls über den Punkt 179 auf den Punkt 114 in Fig. 7 übergegangen. Falls dort im Block 117 nun festgestellt wird, daß der Datenbus ein niedriges Signal führt, ist dies das Zeichen, daß eine andere Station zu senden begonnen hat und das "Bus belegt"-Signal in der zweiten Unterperiode erzeugt, und dadurch wird im Block 122 außer dem ersten Merker bzw. Merkzähler, der sich allerdings allgemein bereits im Ruhezustand befindet, auch der zweite Merker in den Ruhezustand gesetzt. Im übrigen erfolgt der weitere Ablauf wie anhand der Fig. 7 beschrieben.

Wenn bei der Abfrage im Block 176 festgestellt wird, daß der erste Merker bzw. Merkzähler seinen vorgegebenen Wert erreicht hat, wird über den mit C bezeichneten Punkt 177 auf den Punkt 189, der ebenfalls mit C bezeichnet ist. übergegangen und danach der Block 190 durchlaufen, bei dem ein niedriges Signal auf den Datenbus gebracht wird, entsprechend dem Block 141 in Fig. 7.

Im Block 191 wird geprüft, ob der Inhalt des Zeitregisters größer ist als ein minimaler Wert. Es muß nämlich berücksichtigt werden, daß eine Station, die zu senden beginnt, dies mit einem Wert der Periodendauer durchführt, die von der zuletzt davor sendenden Station übernommen wurde, wobei der Bruchteil einer internen Taktpulsperiode am Ende jeweils einer Übertragungsperiode wegfällt, so daß die Zeitdauern der Übertragungsperioden bei jedem Wechsel etwas kürzer werden. Wenn daher der Inhalt des Zeitregisters unter einen in der betreffenden Station fest gelegten Minimalwert fällt, wird im Block 192 dieser Minimalwert statt dessen in das Zeitregister eingeschrieben. Danach folgt, unabhängig vom Wert im Zeitregister, der Block 193, in dem der zweite Merker gesetzt wird, und über den mit F bezeichneten Punkt 194 wird auf den gleich bezeichneten punkt 142 in Fig. 7 übergegangen und der dort dargestellte und beschriebene Ablauf durchlaufen.

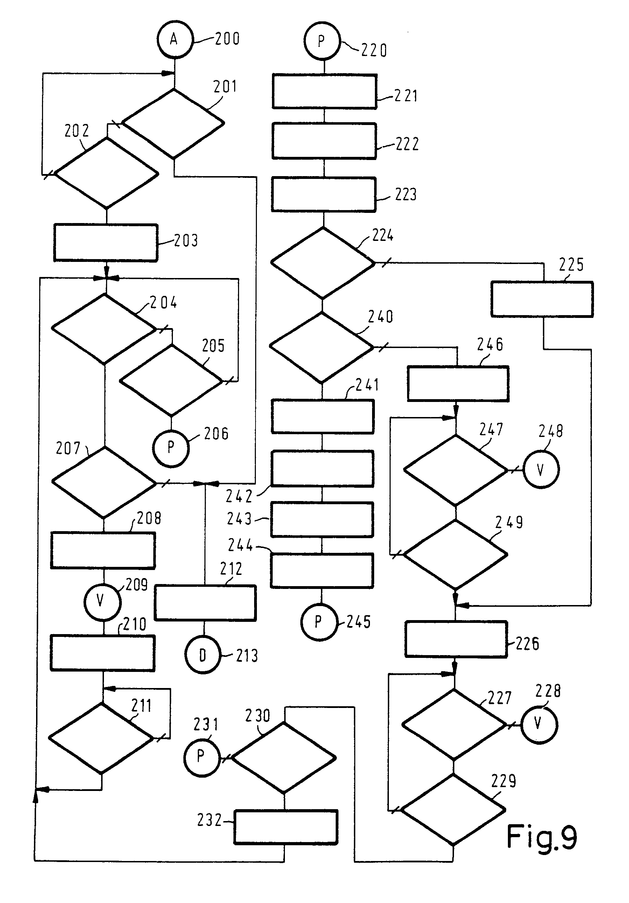

In Fig. 9 ist ein Beispiel für einen Ablauf dargestellt, wenn während Übertragungspausen, während denen keine Station Informationsbit überträgt, auch keine Signalübergänge auf dem Datenbus erzeugt werden.

Nach dem Punkt 200, der mit A bezeichnet ist und dem Punkt 110 in Fig. 7 entspricht, wird der Block 201 durchlaufen, in dem wieder abgefragt wird, ob das Signal auf dem Datenbus niedrig geworden ist. Solange dies noch nicht der Fall ist, wird danach auf den Block 202 übergegangen, in dem geprüft wird, ob der Zeitzähler einen Wert erreicht hat, der um einen vorgegebenen Bruchteil über den im Zeitregister gespeicherten Wert liegt. Wenn nämlich die hier betrachtete Station zuletzt empfangen hat und die sendende Station die Übertragung beendet hat, ist dies daran erkennbar, daß nach Ablauf der letzten Periodendauer, deren Wert im Zeitregister gespeichert ist, kein Übergang des Signals am Datenbus auf einen niedrigen Wert auftritt. So lange dies nicht der Fall ist, wird die Schleife aus den beiden Blöcken 201 und 202 wiederholt durchlaufen.

Wenn ein Signalübergang auf dem Datenbus auftritt, wird vom Block 201 auf den Block 212 übergegangen, in dem der in diesem Augenblick erreichte Wert des Zeitzählers in das Zeitregister übertragen und der Zeitzähler zurückgesetzt wird. Danach wird über den mit D bezeichneten Punkt 213 auf den entsprechend bezeichneten Punkt 123 in Fig. 7 übergegangen. Von den in Fig. 7 dargestellten Endpunkten 134 bzw. 129 wird entsprechend auf den Punkt 200 übergegangen.

Wenn jedoch am Ende einer Übertragung von einer anderen Station im Block 202 festgestellt wird, daß der Zeitzähler die Dauer der letzten vorangegangenen Periode um einen vorgegebenen Bruchteil überschritten hat, womit durch diesen Bruchteil eine Priorität der betreffenden Station eingestellt werden kann, wird im Block 203 ein Empfangsmerker, der einen aktuellen Empfangszustand anzeigt, auf den Anfangswert zurückgesetzt. Anschließend wird im Block 204 geprüft, ob das Signal auf dem Datenbus niedrig geworden ist, d.h. ob eine andere Station begonnen hat zu senden, und wenn dies nicht der Fall ist, wird im Block 205 geprüft, ob in der hier betrachteten Station auszusendende Daten vorliegen. Wenn dies der Fall ist, wird über den mit P bezeichneten Punkt 206 auf den entsprechend bezeichneten Punkt 220 übergegangen, an den sich ein später zu erläuternder Sendeablauf anschließt. Wenn keine zu übertragenden Daten vorliegen, wird zum Block 204 zurückgekehrt, und diese Schleife aus den Blöcken 204 und 205 wird so lange durchlaufen, bis entweder eine andere Station zu senden beginnt oder zu übertragende Daten in dieser Station auftreten.

Wenn eine andere Station zu übertragen beginnt, wird ein Signalübergang auf dem Datenbus auf ein niedriges Signal ausgelöst, und vom Block 204 wird auf den Block 207 übergegangen, in dem geprüft wird, ob der Empfangsmerker im Ruhezustand ist. Wie früher beschrieben, wird in der ersten Periode zu Beginn einer Übertragung kein Informationsbit übersendet, sondern die erste Periode dient lediglich zur Übermittlung der Periodendauer, in der anschließend übertragen wird. Daher befindet sich der Empfangsmerker zunächst noch im Ruhezustand, so daß auf den Block 208 übergegangen wird, in dem der Zeitzähler auf den Anfangswert zurückgesetzt wird. Über den mit V bezeichneten Punkt 209 wird dann auf den Block 210 übergegangen, in dem der Empfangsmerker gesetzt und ein später zu erläuternder Sendemerker gelöscht wird, und anschließend wird im Block 211 geprüft, ob das Signal auf dem Datenbus wieder hoch ist, d.h. ob die erste Teilperiode vergangen ist. Danach wird auf den Block 204 übergegangen, wo der Beginn der nächsten Periode abgewartet wird.

Mit Beginn dieser nächsten Periode wird im Block 207 festgestellt, daß der Empfangsmerker nicht mehr im Ruhezustand ist, und es wird auf den Block 212 übergegangen, in dem der Wert des Zeitzählers in das Zeitregister übertragen wird, das somit die Dauer der ersten Periode enthält, und der Zeitzähler wird auf Null zurückgesetzt. Über den Punkt 213 wird dann wie beschrieben auf den Punkt 123 in Fig. 7 übergegangen, wo das übertragene Informationsbit empfangen bzw. bei zwischenzeitlicher umgekehrter Übertragungsrichtung ein Informationsbit ausgesendet wird. Bei den folgenden Perioden wird über den Punkt 200 und den Block 201 direkt auf den Block 212 übergegangen, bis die von einer anderen Station begonnene Übertragung beendet ist.

Wenn in der hier betrachteten Station eine Informationsübertragung begonnen werden soll, wird, wie erwähnt, vom Punkt 206 auf den Punkt 220 übergegangen und der Block 221 durchlaufen, in dem der Zeitzähler auf den Anfangswert zurückgesetzt wird. Im Block 222 wird ein niedriges Signal auf dem Datenbus erzeugt, und im Block 223 wird gewartet, bis der Zeitzähler einen Wert $1/2T_p$ erreicht hat, wobei $T_p$ ein in dieser Station festgelegter Wert ist, der die Periodendauer dieser Station beim Senden bestimmt.

Im Block 224 wird geprüft, ob ein Sendemerker gesetzt ist. Wenn dies nicht der Fall ist, handelt es sich also um die erste Periode des Sendevorganges, und es wird auf den Block 225 übergegangen, in dem der Sendemerker gesetzt wird, und danach wird im Block 226 ein hohes Potential auf dem Datenbus erzeugt. In dieser ersten Periode eines Übertragungsvorganges wird also keine Information übermittelt, sondern nur die Periodendauer den anderen Stationen mitgeteilt.

Nach dem Block 226 wird im Block 227 geprüft, ob das Signal auf dem Datenbus tatsächlich hoch ist, um den Fall zu berücksichtigen, daß zwei oder mehrere Stationen gleichzeitig zu senden begonnen haben, wobei eine Station mit längerer Periodendauer bewirkt, daß über den mit V bezeichneten Punkt 228 auf den entsprechend bezeichneten Punkt 209 übergegangen wird, wonach sich der Ablauf für den Empfang von Datensignalen anschließt.

Wenn das Signal auf dem Datenbus jedoch tatsächlich hoch ist, wird auf den Block 229 übergegangen, in dem geprüft wird, ob der Zeitzähler den fest vorgegebenen Wert $T_p$ erreicht hat, d.h. eine Übertragungsperiode beendet ist. Solange dies nicht der Fall ist, wird die Schleife aus den Blöcken 227 und 229 wiederholt durchlaufen. Am Ende der Periode wird auf den Block 230 übergegangen, in dem geprüft wird, ob die Übertragung der Information beendet ist. Wenn dies nicht der Fall ist, wird über den mit P bezeichneten Punkt 231 auf den Punkt 220 übergegangen, und eine weitere Periode mit einer Übersendung eines Datenzeichens schließt sich an.

In dieser zweiten oder folgenden Periode wird im Block 224 festgestellt, daß der Sendemerker gesetzt ist, und es wird im Block 240 geprüft, ob eine Übertragung von einer angesprochenen, empfangenden Station zu dieser hier betrachteten, sendenden Station erfolgen soll. Wenn dies der Fall ist, wird, in entsprechender Weise wie in Fig. 7 beim Block 144 angegeben, hier im Block 241 der an den Datenbus angeschlossene Verstärker hochohmig gemacht. Im Block 242 wird gewartet, bis der Zeitzähler den Wert $5/8T_p$ erreicht hat, d.h. die Mitte der zweiten Teilperiode erreicht ist, in der das Signal dem Wert des übertragenen Informationsbits entspricht, und wenn dieser Zeitpunkt erreicht ist, wird im Block 243 das Signal vom Datenbus übernommen und abgespeichert, und im Block 244 wird abgewartet, bis der Zeitzähler den Wert $T_p$ erreicht hat, d.h. eine weitere Periode beendet ist. Danach wird wieder über den mit P bezeichneten Punkt 245 auf den Punkt 220 zurückgegangen.

Falls jedoch ganz normal von der hier betrachteten Station Informationsbits übertragen werden sollen, wird vom Block 240 auf den Block 246 übergegangen, in dem ein Signal entsprechend dem zu übertragenden Informationsbit auf den Datenbus gebracht wird. Im Block 247 wird geprüft, ob das Signal auf dem Datenbus tatsächlich dem von dem zu übertragenden Informationsbit bestimmten Signalwert auf dem Datenbus entspricht, um zu berücksichtigen, daß eine andere Station mit genau der selben Periodendauer zu übertragen begonnen hat, wie bereits anhand des Blockes 151 in Fig. 7 erläutert wurde. Wenn dies der Fall ist, wird über den mit V bezeichneten Punkt 248 auf den entsprechend bezeichneten Punkt 209 übergegangen und der Ablauf zum wiederholten Empfangen von Informationsbits durchlaufen. Falls jedoch das von dieser Station erzeugte Signal mit dem tatsächlichen Signal auf dem Datenbus übereinstimmt, wird im Block 249 geprüft, ob der Zeitzähler den Wert $3/4T_p$ erreicht hat, d.h. das Ende der zweiten Teilperiode T2. Solange dieser Zeitpunkt nicht erreicht ist, wird die Schleife aus den Blöcken 247 und 249 wiederholt durchlaufen. Wenn der Zeitzähler den Wert $3/4T_p$ erreicht hat, geht der Ablauf zum Block 226 über, und der folgende Ablauf ist bereits im wesentlichen beschrieben worden.

Lediglich wenn das letzte Informationsbit übertragen worden ist und im Block 230 festgestellt wird, daß die Übertragung beendet ist, wird nicht über den punkt 231 zum Punkt 220 zurückgegangen, sondern zum Block 232 weitergegangen, in dem der Sendemerker zurückgesetzt wird, so daß die Station damit den Sendezustand wieder verlassen hat. Danach wird wieder auf den Block 204 zurückgegangen und die Warteschleife aus den Blöcken 204 und 205 für den Ruhezustand durchlaufen, bis entweder eine andere Station zu übertragen beginnt oder in der hier betrachteten Station erneut zu übertragende Informationen vorliegen.

Die hier beschriebenen Abläufe sind nur als Beispiele angegeben und können auch anders aufgebaut sein. Insbesondere sind bei den beschriebenen Abläufen keine Maßnahmen zur Bereitstellung von zu sendenden Daten oder Verarbeitung von empfangenen Daten beschrieben, insbesondere auch nicht die für die Steuerung der Daten erforderlichen Maßnahmen, wenn die Station zu senden begonnen hat, jedoch von einer anderen Station, die gleichzeitig zu senden begonnen hat, in den Empfangszustand gebracht worden ist, da derartige Maßnahmen nicht zum eigentlichen Vorgang der Übertragung von Informationen, auf den sich die Erfindung bezieht, gehören. Diese Maßnahmen können vorzugsweise von dem selben Mikroprozessor ausgeführt werden, der die beschriebenen Übertragungsvorgänge steuert, beispielsweise während der dabei angegebenen Wartevorgänge.

Wie aus der bisherigen Beschreibung hervorgeht, ist der Datenbus ein sogenannter "logischer Eindrahtbus", d.h. es wird nur ein einziges Signal zur Zeit übertragen, wobei im Falle einer elektrischen Verbindung außer dem Signaldraht ein zweiter Draht für ein Bezugspotential erforderlich sind. Im Falle einer Glasfaserverbindung ist jedoch nur tatsächlich eine Glasfaser notwendig. Im übrigen ist für den Datenbus jedoch nicht unbedingt immer eine spezielle Verbindung erforderlich, sondern die auf den Datenbus zu übertragenden Signale können auch als mehr oder weniger ungerichtete Schallsignale oder Lichtsignale oder elekromagnetische Wellen anderer Frequenz durch die Luft oder im letzteren Falle durch den freien Raum übertragen werden. Dabei kann der Signalübergang von einem Medium auf ein anderes Medium, beispielsweise von elektrischen Signalen auf Lichtsignale, ohne eine besondere Verarbeitung direkt umgesetzt werden. Die Versorgung einzelner Stationen mit elektrischer Energie von einer oder mehreren anderen Stationen ist jedoch praktisch nur bei Verwendung elektrischer Leitungen als Datenbus möglich. Um dabei die Zeit, während der die Stationen über den Datenbus mit Energie versorgt werden, d.h. in der das Signal auf dem Datenbus hoch ist, zu verlängern, kann dann auch ein anderes Verhältnis der einzelnen Teilperioden bzw. Unter perioden untereinander gewählt werden, insbesondere kann die dritte Teilperiode wesentlich verlängert werden. Wenn beispielsweise die Dauer der dritten Teilperiode fünf Achtel der Gesamtperiode einnimmt und die beiden Unterperioden und die zweite Teilperiode nur jeweils ein Achtel der gesamten Periodendauer beträgt, muß beispielsweise die beschriebene Verschiebung des Zählerstandes bei den Anordnungen nach Fig. 4 und Fig. 6 um eine Stelle mehr er folgen.

**Patentansprüche**

1. Verfahren zur Übertragung von Daten von einer Station zu einer anderen Station über einen Datenbus, an den mehrere Stationen parallel derart angeschlossen sind, daß die von allen Stationen ausgesandten Signale über eine ODER-Funktion auf dem Datenbus verknüpft werden, wobei alle Stationen die auf dem Datenbus vorhandenen Signale empfangen und mindestens einige Stationen unabhängig voneinander einen Zugriff auf den Datenbus für eine Datenübertragung ausführen, wenn zu übertragende Daten vorhanden sind und das auf dem Datenbus vorhandene Signal während einer vorgegebenen Zeitdauer dem logischen Wert "0" entspricht, und für eine Datenübertragung periodisch für jedes Datenbit zunächst während einer vorgegebenen ersten Teilperiode ein Signal entsprechend dem logischen Wert "1", der den Zustand des Datenbusses als "belegt" kennzeichnet, während einer vorgegebenen zweiten Teilperiode ein Signal, das dem Wert des zu übertragenden Datenbits entspricht, und während einer vorgegebenen dritten Teilperiode ein Signal entsprechend dem logischen Wert "0" auf dem Datenbus übertragen wird, dadurch gekennzeichnet, daß die erste Teilperiode in zwei Unterperioden unterteilt ist, daß die Zeitdauern der drei Teilperioden und der Unterperioden ein festes Verhältnis zueinander aufweisen, wobei während der ersten Unter periode auch außerhalb der Datenübertragung auf dem Datenbus stets ein Signal entsprechend dem logischen Wert "1" und während der zweiten Unterperiode nur während einer Datenübertragung ein Signal entsprechend dem logischen Wert "1" über den Datenbus übertragen wird und eine sendebereite Station nur dann einen Zugriff auf dem Datenbus ausführt, wenn in der zweiten Unterperiode das Signal auf dem Datenbus dem logischen Wert "0" entspricht, und daß in allen Stationen aus den Signalübergängen auf dem Datenbus zu Beginn jeweils zweier aufeinanderfolgender perioden die Lage der Teilperioden darin in der jeweils folgenden Periode ermittelt wird.

2. Verfahren nach Anspruch 1, dadurch gekennzeichnet, daß die zweite und die dritte Teilperiode bzw. die Unterperioden gleiche Zeitdauern von jeweils 1/4 der Periode haben.

3. Verfahren nach Anspruch 1 oder 2, dadurch gekennzeichnet, daß die Ermittlung des Zustandes des Datenbusses und des logischen Wertes des zu übertragenen Bits jeweils etwa in der Mitte der zugehörigen Teilperiode bzw. Unterperiode vorgenommen wird.

4. Verfahren nach Anspruch 1 oder einem der folgenden, dadurch gekennzeichnet, daß auch, wenn in der ersten Teilperiode bzw. der zweiten Unterperiode ein Signal entsprechend dem logischen Wert "1" durch eine erste Station über den Datenbus übertragen wird, eine durch von dieser ersten Station ausgesandte Daten adressierte zweite Station während der zweiten Teilperiode mindestens einer Periode ein Signal entsprechend dem logischen Wert eines zu übertragenden Datenbits über den Datenbus überträgt und die erste Station während der zweiten Teilperiode dieser Periode ein Signal entsprechend dem logischen Wert "0" dem Datenbus zuführt.

5. Station zur Durchführung des Verfahrens nach Anspruch 1 mit einem Taktimpulsgenerator und mit empfangsseitig einem vom Taktimpulsgenerator gesteuerten ersten Zähler, der mindestens mit dem ersten Signalübergang des Signals auf dem Datenbus von einer Anfangsstellung aus mit dem Taktsignal des Taktimpulsgenerators zu zählen beginnt und bei mindestens einem weiteren Signalübergang den in diesem Augenblick erreichten Zählerstand in einen Speicher überträgt und danach wiederholt bis zu einem Bruchteil des gespeicherten Zählerstandes zählt und dabei jeweils ein Abtastsignal erzeugt, dadurch gekennzeichnet, daß sendeseitig eine vom Taktimpulsgenerator (20) gesteuerte Ablaufsteuerung (4) vorgesehen ist, die periodisch während drei aufeinanderfolgender Teilperioden und während der ersten Teilperiode für jede der beiden Unterperioden getrennte Sendesteuersignale abgibt, von denen das Sendesteuersignal während der ersten Unterperiode zumindest von einer der Stationen (A, B, . . . ) auch außerhalb einer Datenübertragung und während der zweiten Unterperiode nur bei einer Datenübertragung ein Signal entsprechend dem logischen Wert "1", auf dem Datenbus (1) erzeugt, und daß empfangsseitig außerdem eine Zähleinrichtung (40, 42, 44; 76, 78) vorgesehen ist, die mit dem Signalübergang des Signals auf dem Datenbus zu Beginn jeder Periode von einer Anfangsstellung aus mit dem Taktsignal des Taktimpulsgenerators (20) zu zählen beginnt, wobei der erste Zähler (30; 70) jedesmal vorher seinen in diesem Augenblick erreichten Zählerstand in einen ersten Speicher (40, 42, 44; 74) überträgt, daß die Zähleinrichtung (40, 42, 44; 76, 78) bei Erreichen einer ersten Zählerstellung, die gleich einem vorgegebenen ersten Bruchteil der in dem ersten Speicher (40, 42, 44; 74) übertragenen Zählerstellung entsprechend einem Zeitpunkt innerhalb der zweiten Unterperiode ist, ein erstes Abtastsignal (S1) erzeugt und einer ersten Abtastschaltung (50) zuführt, die bei einem gleichzeitig auf dem Datenbus (1) vorhandenen Signal, das dem logischen Wert "1" entspricht, ein dauerndes "Bus belegt" Signal erzeugt, bis bei einem folgenden ersten Abtastsignal (S1) das gleichzeitig auf dem Datenbus (1) vorhandene Signal dem logischen Wert "0" entspricht, und daß die Zähleinrichtung (40, 42, 44; 76, 78) bei Erreichen einer zweiten Zählerstellung, die gleich einem zweiten vorgegebenen Bruchteil der in dem ersten Speicher (40, 42, 44. 74) übertragenen Zählerstellung entsprechend einem, Zeitpunkt innerhalb der zweiten Teilperiode ist, ein zweites Abtastsignal (S2) erzeugt und bei Vorhandensein des "Bus belegt" Signals einer zweiten Abtastschaltung (54) zuführt, die ebenfalls das auf dem Datenbus (1) vorhandene Signal erhält und die am Datenausgang (55) einen diesem Signal entsprechenden Datenbitwert erzeugt.

6. Station nach Anspruch 5, dadurch gekennzeichnet, daß die Zähleinrichtung (40, 42, 44; 76, 78) einen zweiten, einen dritten und mindestens einen vierten Zähler (40, 42, 44) enthält, von denen jeder den ersten Speicher darstellt und von denen mit dem Beginn der ersten Teilperiode der zweite Zähler auf einen Bruchteil entsprechend dem um drei Stellen verschobenen Zählerstand des ersten Zählers (30) und der dritte und vierte Zähler auf einen Bruchteil entsprechend dem um zwei Stellen verschobenen Zählerstand des ersten Zählers (30) gesetzt wird und alle mit dem Taktsignal des Taktimpulsgenerators (20) auf die Nullstellung zurückzählen, wobei der zweite Zähler (40) mit dem Beginn der ersten Teilperiode und der dritte und vierte Zähler (42, 44) jeweils mit Erreichen der Nullstellung des vorhergehenden Zählers (40, 42) mit dem Zurückzählen beginnen, und daß das Erreichen der Nullstellung des vierten Zählers (44) das zweite Abtastsignal (S2) bestimmt.

7. Station nach Anspruch 5, dadurch gekennzeichnet daß die Zähleinrichtung (76, 78) einen fünften Zähler (76) enthält, der mit dem Taktsignal des Taktimpulsgenerators (20) rückwärts zählt und am Anfang der ersten Teilperiode und nach jedem Erreichen der Nullstellung auf einen Bruchteil entsprechend dem um drei Stellen verschobenen Zählerstandes des ersten Zählers (70) über den ersten Speicher (74) gesetzt wird und der bei Erreichen der Nullstellung einen Zähltakt an einen sechsten Zähler (78) abgibt, der ausgehend von der Zählerstellung bei Beginn der ersten Teilperiode bei der dritten Zählerstellung das erste Abtastsignal (S1) und bei der fünften Zählerstellung das zweite Abtastsignal (S2) erzeugt.

8. Station nach einem der Ansprüche 5 bis 7, dadurch gekennzeichnet, daß die Zähleinrichtung (40, 42, 44; 76, 78) die sendeseitige Ablaufsteuerung (4) darstellt und die Sendesteuersignale erzeugt.

9. Station nach einem der Ansprüche 5 bis 8, dadurch gekennzeichnet, daß mindestens einige Einrichtungen durch einen Microprozessor realisiert sind, der von einem fest eingegebenen Programm gesteuert ist.

10. Station nach einem der Ansprüche 5 bis 9, dadurch gekennzeichnet, daß der Datenbus (1) aus einer Zweifachleitung besteht und daß bei mindestens einem Teil der Stationen (A, B, . . . ) die Stromversorgung der elektronischen Schaltung über ein Glättungsglied (38, 39) mit der Zweifachleitung verbunden ist.

**Revendications**

1. Procédé pour la transmission de données d'un poste à un autre poste par l'intermédiaire d'un bus de données auquel plusieurs postes sont connectés en parallèle, d'une manière telle que les signaux émis par tous les postes soient combinés par l'intermédiaire d'une fonction OU sur le bus de données, dans lequel tous les postes reçoivent les signaux présents sur le bus de données et au moins quelques postes effectuent, indépendamment les uns des autres, une procédure d'accès au bus de données pour une transmission de données, lorsque des données à transmettre sont présentes et que le signal présent sur le bus de données correspond pendant une durée prédéfinie à la valeur logique "0", et où, en vue d'une transmission de données, sont transmis périodiquement sur le bus de données, pour chaque bit de données, initialement pendant une première période partielle prédéfinie, un signal correspondant à la valeur logique "1", qui caractérise l'état du bus de données comme "occupé", pendant une deuxième période partielle prédéfinie, un signal qui correspond à la valeur du bit de données à transmettre et pendant une troisième période partielle prédéfinie, un signal correspondant à la valeur logique "0", caractérisé en ce que la première période partielle est subdivisée en deux sous-périodes, que les durées des trois périodes partielles et des sous-périodes sont mutuellement dans un rapport fixe, étant entendu que pendant la première sous période, même en l'absence de transmission de données sur le bus de données, un signal correspondant à la valeur logique "1" est toujours transmis par l'intermédiaire du bus de données et pendant la seconde sous-période, un signal correspondant à la valeur logique " I" n'est transmis par l'intermédiaire du bus de données que pendant une transmission de données et un poste prêt à l'émission n,effectue une procédure d'accès au bus de données que lorsque dans la deuxième sous-période, le signal sur le bus de données correspond à la valeur logique "0" et que, dans tous les postes, il est déterminé, à partir des transitions de signaux sur le bus de données au début de chaque fois deux périodes successives, quelle y sera chaque fois la position des périodes partielles dans la période suivante.

2. Procédé suivant la revendication 1, caractérisé en ce que la deuxième et la troisième période partielle ou les sous-périodes ont les mêmes durées de chaque fois un quart de période.

3. Procédé suivant la revendication 1 ou 2, caractérisé en ce que la détermination de l'état du bus de données et de la valeur logique des bits à transmettre est chaque fois effectuée environ au milieu de la période partielle ou sous-période associée.

4. Procédé suivant la revendication 1 ou l'une quelconque des revendications suivantes, caractérisé en ce que même lorsque, dans la première période partielle ou la seconde sous-période, un signal correspondant à la valeur logique "1" est transmis par un premier poste par l'intermédiaire du bus de données, un second poste adressé par des données émises par ce premier poste transmet, par l'intermédiaire du bus de données, pendant la seconde période partielle d'au moins une période, un signal correspondant à la valeur logique d'un bit de données à transmettre, et le premier poste applique, pendant la seconde période partielle de cette période, un signal correspondant à la valeur logique "0" au bus de données.

5. Poste pour l'exécution du procédé suivant la revendication 1, comportant un générateur d'impulsions d'horloge et, du côté réception, un premier compteur piloté par le générateur d'impulsions d'horloge, qui commence à compter à partir d'une position initiale, au moins lors de la première transition du signal sur le bus de données, au rythme du signal d'horloge du générateur d'impulsions d'horloge et transfère, au moins lors d'une autre transition de signal, l'état de comptage atteint à cet instant dans une mémoire, puis compte à répétition jusqu'à une fraction de l'état de comptage stocké en produisant chaque fois un signal d'échantillonnage, caractérisé en ce que, du côté émission, est prévue une commande séquentielle (4) pilotée par le générateur d'impulsions d'horloge (20), qui fournit, périodiquement pendant trois périodes partielles successives et pendant la première période partielle, pour chacune des deux sous-périodes, des signaux de commande d'émission séparés parmi lesquels le signal de commande d'émission produit un signal correspondant à la valeur logique "1" sur le bus de données (1) pendant la première sous-période d'au moins un des postes (A, B, . . . ), même en l'absence de transmission de données, et pendant la deuxième sous-période, uniquement lors d'une transmission de données, et que du côté réception, est en outre prévu un dispositif de comptage (40, 42, 44; 76, 78), qui commence à compter à partir d'une position initiale, lors de la transition du signal sur le bus de données au début de chaque période, au rythme du signal d'horloge du générateur d'impulsions d'horloge (20), le premier compteur (30; 70) transférant chaque fois préalablement son état de comptage atteint à cet instant dans une première mémoire (40, 42, 44; 74), que le dispositif de comptage (40, 42, 44; 76, 78), lorsqu'il atteint une première position de comptage qui est égale à une première fraction prédéfinie de la position de comptage transférée dans la première mémoire (40, 42, 44; 74) correspondant à un instant faisant partie de la seconde sous-période, produit un premier signal d'échantillonnage (S1) et l'applique à un premier circuit échantillonneur (50) qui, lors de la présence simultanée sur le bus de données (1) d'un signal qui correspond à la valeur logique "1", produit un signal "bus occupé" permanent jusqu'à ce que, lors d'un premier signal d'échantillonnage (S1) suivant, le signal présent simultanément sur le bus de données (1) corresponde à la valeur logique " 0", et que le dispositif de comptage (40, 42, 44; 76, 78), lorsqu'il atteint une deuxième position de comptage qui est égale à une deuxième fraction prédéfinie de la position de comptage transférée dans la première mémoire (40, 42, 44; 74) correspondant à un instant situé dans la deuxième période partielle, produit un deuxième signal d'échantillonnage (S2) et, lors de la présence du signal "bus occupé", l'applique à un second circuit d'échantillonnage (54) qui reçoit également le signal présent sur le bus de données (1) et produit à la sortie de données (55) une valeur de bit de données correspondant à ce signal.

6. Poste suivant la revendication 5, caractérisé en ce que le dispositif de comptage (40, 42, 44; 76, 78) contient un deuxième, un troisième et au moins un quatrième compteur (40, 42, 44), qui représentent chacun la première mémoire et parmi lesquels, au début de la première période partielle, le deuxième compteur est positionné sur une fraction correspondant à la position de comptage du premier compteur (30) décalée de trois positions et le troisième et le quatrième compteur, sur une fraction correspondant à la position de comptage du premier compteur (30) décalée de deux positions et qui décomptent tous jusqu'à la position zéro au rythme du signal d'horloge du générateur d'impulsions d'horloge (20), le deuxième compteur (40) commençant à décompter au début de la première période partielle, et le troisième et le quatrième compteur (42, 44), chaque fois lorsque la position zéro du compteur précédent (40, 42) est atteinte, et que l'arrivée à la position zéro du quatrième compteur (44) détermine le deuxième signal d'échantillonnage (S2).

7. Poste suivant la revendication 5, caractérisé en ce que le dispositif de comptage (76, 78) contient un cinquième compteur (76) qui décompte au rythme du signal d'horloge du générateur d'impulsions d'horloge (20) et est positionné, au début de la première période partielle, ainsi qu'après chaque arrivée à la position zéro, par l'intermédiaire de la première mémoire (74), sur une fraction correspondant à la position de comptage du premier compteur (70) décalée de trois positions et qui, lors de l'arrivée à la position zéro, fournit une impulsion de comptage à un sixième compteur (78) qui, au départ de la position de comptage au début de la première période partielle, produit le premier signal d'échantillonnage (S1) à la position du troisième compteur et le deuxième signal d'échantillonnage (S2) à la position du cinquième compteur.

8. Poste suivant l'une quelconque des revendications 5 à 7, caractérisé en ce que le dispositif de comptage (40, 42, 44; 76, 78) constitue la commande séquentielle (4) du côté d'émission et produit les signaux de commande d'émission.

9. Poste suivant l'une quelconque des revendications 5 à 8, caractérisé en ce qu'au moins quelques dispositifs sont réalisés par un microprocesseur qui est commandé par un programme introduit à demeure.

10. Poste suivant l'une quelconque des revendications 5 à 9, caractérisé en ce que le bus de données (1) est constitué d'une ligne double et que, pour au moins une partie des postes (A, B, ...), l'alimentation en courant du circuit électronique est connectée par l'intermédiaire d'un élément de lissage (38, 39) à la ligne double.

**Claims**

1. A method for the tranmission of data from one station to an other station via a data bus whereto several stations are connected in parallel so that the signals transmitted by all stations are combined on the data bus by way of an OR-function, all stations receiving the signals present on the data bus and at least some stations independently accessing the data bus for a data transmission if data to be transmitted is present and the signal present on the data bus corresponds to the logic value "0" for a predetermined period of time, for a data transmission periodically first a signal which corresponds to the logic value "1" and which characterizes the state of the data bus as "occupied" being transmitted on the data bus for each data bit during a predetermined first partial period, while during a predetermined second partial period a signal which corresponds to the value of the data bit to be transmitted is transmitted thereon, and during a predetermined third partial period a signal which corresponds to the logic value "0" is transmitted thereon, characterized in that the first partial period is divided into two sub-periods, the ratio of the durations of the three partial periods and the sub-periods being fixed, during the first partial period there always being transmitted, also outside the data transmission on the data bus, a signal which corresponds to the logic value "1" while during the second sub-period a signal which corresponds to the logic value "1" is transmitted on the data bus only during a data transmission, a station which is ready for transmission accessing the data bus only if the signal on the data bus corresponds to the logic value "0" during the second sub-period, at the beginning of each time two successive periods in all stations there being determined, from the signal transitions on the data bus, the position of the partial periods therein in the respective subsequent period.

2. A method as claimed in Claim 1, characterized in that the second and the third partial period and the sub-periods have the same durations equal to 1/4 period.

3. A method as claimed in Claim 1 or 2, characterized in that the determination of the state of the data bus and of the logic value of the bit to be transmitted is performed each time approximately halfway the associated partial period or sub-period.

4. A method as claimed in Claim 1 or any one of the subsequent Claims, characterized in that even when during the first partial period or the second sub-period a signal corresponding to the logic value "1" is transmitted via the data bus by a first station, a second station addressed by data transmitted by said first station transmits, during the second partial period of at least one period, a signal which corresponds to the logic value of a data bit to be transmitted via the data bus, the first station applying a signal corresponding to the logic value "0" to the data bus during the second partial period of this period.

5. A station for performing the method claimed in Claim 1, comprising a clock pulse generator and a first counter which is connected to the receiving side and which is controlled by a clock pulse generator, which counter starts to count, at least in response to the first signal transition of the signal on the data bus, from a starting position in step with the clock signal of the clock pulse generator, and transfers, at least in response to a further signal transition, the count reached at that instant to a memory and subsequently counts repeatedly to a fraction of the stored count, each time generating a sampling signal in response thereto, characterized in that at the transmission side there is provided a sequencer (4) which is controlled by the clock pulse generator (20) and which periodically outputs separate transmission control signals for each of the two sub-periods during three successive partial periods and during the first partial periods, the transmission control signal generating during the first sub-period of at least one of the stations (A, B, . . . ), also outside a data transmission, and during the second sub-period, be it only in the case of a data transmission, a signal which corresponds to the logic value "1" on the data bus (1), at the receiving side there also being provided a counting device (40, 42, 44; 76, 78) which starts to count, in response to the transition of the signal on the data bus at the beginning of each period, from a starting position in step with the clock signal of the clock pulse generator (20), the first counter (30; 70) each time transferring in advance its count reached at that instant to a first memory (40, 42, 44; 74), the counting device (40, 42, 44; 76, 78) generating a first sampling signal (S1) when it reaches a first count which equals a predetermined first fraction of the count transferred to the first memory (40, 42, 44; 74) and corresponding to an instant within the second sub-period, said sampling signal being applied to a first sampling circuit (50) which, in the case of the simultaneous presence of a signal on the data bus (1) which corresponds to the logic value "1", generates a permanent "bus occupied" signal until, upon a next first sampling signal (S1), the signal simultaneously present on the data bus (1) corresponds to the logic value "0", the counting device (40, 42, 44; 76, 78) generating a second sampling signal (S2) when it reaches a second count which equals a second, predetermined fraction of the count transferred to the first memory (40, 42, 44; 74) and corresponding to an instant within the second partial period, the latter sampling signal being applied to a second sampling circuit (54) when the "bus occupied" signal is present, which second sampling circuit also receives the signal present on the data bus (1) and generating a data bit value corresponding to said signal on the data output (55).

6. A station as claimed in Claim 5, characterized in that the counting device (40, 42, 44; 76, 78) comprises a second, a third and at least one fourth counter (40, 42, 44), each of which constitutes the first memory, the second counter being set at the beginning of the first partial period, to a fraction corresponding to the count of the first counter (30) shifted by three positions, the third and the fourth counter being set to a fraction corresponding to the count of the first counter (30) shifted by two positions, all counter counting down to the zero position in step with the clock signal of the clock pulse generator (20), the second counter (40) starting to count down at the beginning of the first partial period, the third and the fourth counter (42, 44) starting to count down each time when the zero position of the preceding counter (40, 42) is reached, the reaching of the zero position of the fourth counter (44) determining the second sampling signal (S2).

7. A station as claimed in Claim 5, characterized in that the counting device (76, 78) comprises a fifth counter (76) which counts down in step with the clock signal of the clock pulse generator (20) and which is set, at the start of the first partial period and each time when the zero position is reached, to a fraction corresponding to the count of the first counter (70) shifted by three positions, via the first memory (74), and which, when the zero position is reached, outputs a counting pulse to a sixth counter (78) which, starting from the count at the beginning of the first partial period, generates the first sampling signal (S1) when the third count is reached and generates the second sampling signal (S2) when the fifth count is reached.

8. A station as claimed in any one of the Claims 5 to 7, characterized in that the counting device (40, 42, 44; 76, 78) constitutes the sequencer (4) at the transmission side and generates the transmission control signals.

9. A station as claimed in any one of the Claims 5 to 8, characterized in that at least some devices are realised in the form of a microprocessor which is controlled by a fixed program.

10. A station as claimed in any one of the Claims 5 to 9, characterized in that the data bus (1) consists of a two-wire line, in at least a part of the stations (A, B, . . . ) the power supply for the electronic circuit being connected to the two-wire line via a smoothing means (38, 39).

FIG.1

FIG.2

FIG.3

FIG.4

EP 0 150 540 B1

FIG.5a

FIG.5b

FIG.5c

3

FIG.6

4

Fig.7

Fig.8

Fig.9

7